# EUROPEAN PATENT APPLICATION

(11) **EP 4 391 676 A1**
(43) Date of publication of application: **26.06.2024**
(21) Application number: 21953665.3
(22) Date of filing: 16.08.2021
(51) Int. Cl.: H04W 72/04

(54) **DOWNLINK CONTROL INFORMATION ALIGNMENT METHOD AND APPARATUS**

(71) Applicant: Beijing Xiaomi Mobile Software Co., Ltd., Beijing 100085 (CN)
(72) Inventor: ZHAO, Qun, Beijing 100085 (CN)
(74) Representative: Stöckeler, Ferdinand
(86) International application number: PCT/CN2021/112873
(87) International publication number: WO 2023/019411

(57) **Abstract**

Disclosed are a downlink control information (DCI) alignment method and apparatus, which can be applied to the technical field of communications. The method executed by a network device comprises: aligning the payload of first DCI with the payload of one of second DCI according to a statistical manner of the size of the first DCI, the first DCI being DCI used for scheduling a multi-broadcast scheduling (MBS) specific service, and the second DCI being DCI used for scheduling other services (S21). In this way, the network device aligns the payload of the first DCI used for scheduling the MBS service with the payload of one of the second DCI used for scheduling other services, so that the situation that the total number of DCI having different sizes and finally sent by the network device exceeds the capability of a terminal device is avoided.

## Description

### TECHNICAL FIELD

The disclosure relates to the field of communication technology, and more particularly, to a method and an apparatus for aligning downlink control information.

### BACKGROUND

In a multicast-broadcast scheduling (MBS) service in a communication system, due to a difference between a frequency domain resource for transmission of the MBS service and a Bandwidth Part (BWP) of a terminal, a difference between an information field contained in Downlink Control Information (DCI) for scheduling the MBS service and an information field contained in DCI for scheduling other services, or other reasons, a payload of the DCI for scheduling the MBS service may be different from a payload of the DCI for scheduling other services, which may result in the number of DCI sizes configured by a network devices exceeding a capacity of the terminal.

### SUMMARY

Embodiments of the disclosure provide a method and an apparatus for aligning downlink control information, which can be applied in the field of communication technology.

In a first aspect, embodiments of the disclosure provide a method for aligning downlink control information, performed by a network device. The method includes: aligning a payload of a first DCI with a payload of one of second DCIs according to a classification mode of a size of the first DCI, in which the first DCI is a DCI used for scheduling a multicast-broadcast scheduling (MBS) service, and the second DCI is a DCI used for scheduling a service other than the MBS service.

Optionally, aligning the payload of the first DCI with the payload of one of the second DCIs according to the classification mode of the size of the first DCI includes:

in a case where the classification mode of the size of the first DCI is classifying the first DCI as a DCI scrambled by a cell-radio network temporary identifier (C-RNTI), and alignment of the second DCIs is completed, aligning the payload of the first DCI with a payload of a second DCI transmitted in a common search space (CSS) or a user equipment (UE)-specific search space (USS).

Optionally, aligning the payload of the first DCI with the payload of the second DCI transmitted in the CSS or the USS includes:
adding a padding bit to the first DCI, or adding an appended bit after all effective information fields of the first DCI, or performing truncation on the first DCI, to make a payload of a processed first DCI consistent with a payload of a DCI in format 1_0 transmitted in the CSS;
   or
adding a padding bit to the first DCI, or adding an appended bit after all effective information fields of the first DCI, or performing truncation on the first DCI, to make a payload of a processed first DCI consistent with a payload of a DCI in format 1_0 transmitted in the USS;
   or
adding a padding bit to the first DCI, or adding an appended bit after all effective information fields of the first DCI, or performing truncation on the first DCI, to make a payload of a processed first DCI consistent with a payload of a DCI in format 1_1 transmitted in the USS;
   or
adding a padding bit to the first DCI, or adding an appended bit after all effective information fields of the first DCI, or performing truncation on the first DCI, to make a payload of a processed first DCI consistent with a payload of a DCI in format 1_2 transmitted in the USS;
   or
adding a padding bit to a second DCI in a format 1_1 or a format 1_2 transmitted in the USS, or adding an appended bit after all effective information fields of the second DCI, or performing truncation on the second DCI, to make a payload of a processed second DCI consistent with the payload of the first DCI.

Optionally, aligning the payload of the first DCI with the payload of one of the second DCIs according to the classification mode of the size of the first DCI includes:
in a case where the classification mode of the size of the first DCI is classifying the first DCI as a DCI scrambled by a radio network temporary identifier (RNTI) other than the C-RNTI, aligning the payload of the first DCI with a payload of a second DCI scrambled by the RNTI other than the C-RNTI.

Optionally, aligning the payload of the first DCI with the payload of the second DCI scrambled by the RNTI other than the C-RNTI includes:
determining a size of a frequency-domain resource allocation (FDRA) field in the first DCI according to a number of resource blocks (RBs) contained in a control resource set (CORESET) # 0, or a number of RBs contained in an initial downlink (DL) bandwidth portion (BWP); and
in a case where the payload of the first DCI is different from the payload of the second DCI scrambled by the RNTI other than the C-RNTI, aligning the payload of the first DCI with the payload of the second DCI scrambled by the RNTI other than the C-RNTI.

Optionally, aligning the payload of the first DCI with the payload of the second DCI scrambled by the RNTI other than the C-RNTI includes:
in a case where the payload of the first DCI is smaller than the payload of the second DCI scrambled by the RNTI other than the C-RNTI, adding a padding bit to the first DCI, or adding an appended bit after all effective information fields of the first DCI;
   or
in a case where the payload of the first DCI is greater than the payload of the second DCI scrambled by the RNTI other than the C-RNTI, performing truncation on the first DCI.

Optionally, performing the truncation on the first DCI includes:
performing the truncation on the FDRA field of the first DCI.

Optionally, the method further includes:
in a case where the number of RBs contained in the CORESET # 0 is greater than a number of RBs contained in a common frequency resource (CFR), determining FDRA information according to N highest bits or N lowest bits in the first DCI;
   or
in a case where the number of RBs contained in the initial DL BWP is greater than the number of RBs contained in the CFR, determining the FDRA information according to the N highest bits or the N lowest bits in the first DCI;
N is a positive integer.

Optionally, the method further includes:
scaling a frequency-domain scheduling granularity of the first DCI in a case where the number of RBs contained in the CORESET # 0 is less than a number of RBs contained in a CFR;
   or
scaling the frequency-domain scheduling granularity of the first DCI in a case where the number of RBs contained in the initial DL BWP is less than the number of RBs contained in the CFR.

Optionally, scaling the frequency-domain scheduling granularity of the first DCI includes:
determining a scaling factor according to a ratio of the number of RBs contained in the CFR to the number of RBs contained in the CORESET # 0;
   or
determining a scaling factor according to a ratio of the number of RBs contained in the CFR to the number of RBs contained in the DL BWP.

Optionally, aligning the payload of the first DCI with the payload of one of the second DCIs according to the classification mode of a size of the first DCI includes:
in a case where the classification mode of the size of the first DCI is classifying the first DCI as a DCI scrambled by a C-RNTI, and alignment of the second DCIs is not completed, aligning the payload of the first DCI with the payload of one of the second DCIs according to a format of the first DCI.

Optionally, aligning the payload of the first DCI with the payload of one of the second DCIs according to the format of the first DCI includes:
in a case where the format of the first DCI is format 1_0, determining a size of a FDRA field in the first DCI according to a number of RBs contained in a CORESET # 0 or a number of RBs contained in an initial DL BWP; and
in a case where the payload of the first DCI is different from a payload of a second DCI scrambled by a RNTI other than the C-RNTI, adding a padding bit to the first DCI, or adding an appended bit after all effective information fields of the first DCI, or performing truncation on a part of the information fields, to align the payload of the first DCI with the payload of the second DCI scrambled by the RNTI other than the C-RNTI.

Optionally, the method further includes:
in a case where the number of RBs contained in the CORESET # 0 is greater than a number of RBs contained in a CFR, or in a case where the number of RBs contained in the initial DL BWP is greater than the number of RBs contained in the CFR, determining FDRA information according to N highest bits or N lowest bits in the first DCI, in which N is a positive integer;
   or
in a case where the number of RBs contained in the CORESET # 0 is less than the number of RBs contained in the CFR, or in a case where the number of RBs contained in the initial DL BWP is less than the number of RBs contained in the CFR, scaling a frequency-domain scheduling granularity of the first DCI.

Optionally, scaling the frequency-domain scheduling granularity of the first DCI includes:
determining a scaling factor according to a ratio of the number of RBs contained in the CFR to the number of RBs contained in the CORESET # 0;
   or
determining a scaling factor according to a ratio of the number of RBs contained in the CFR to the number of RBs contained in the DL BWP.

Optionally, aligning the payload of the first DCI with the payload of one of the second DCIs according to the format of the first DCI includes:
in a case where the format of the first DCI is format 1_1 or format 1_2, determining a size of a FDRA field in the first DCI according to a number of RBs included in a CFR; and
aligning the payload of the first DCI with the payload of one of the second DCIs.

Optionally, aligning the payload of the first DCI with the payload of one of the second DCIs includes:
in a case where a current cell is configured with a second DCI having a same format as the first DCI, aligning the payload of the first DCI with a payload of the second DCI having the same format as the first DCI and scrambled by the C-RNTI;
   or
in a case where the current cell is not configured with a second DCI having a same format as the first DCI, aligning the payload of the first DCI with a payload of a specified second DCI, in which the specified second DCI is a DCI in format 1_1 or format 1_2.

Optionally, aligning the payload of the first DCI with the payload of one of the second DCIs includes:
in a case where the payload of the first DCI is smaller than the payload of one of the second DCIs, adding a padding bit to the first DCI, or adding an appended bit after an information field of the first DCI;
   or
in a case where the payload of the first DCI is greater than the payload of one of the second DCIs, performing truncation on the first DCI.

Optionally, adding the padding bit to the first DCI or adding the appended bit after the information field of the first DCI includes:
adding the padding bit in a FDRA field of the first DCI.

Optionally, performing truncation on the first DCI includes:
performing truncation on a FDRA field in the first DCI.

In a second aspect, embodiments of the disclosure provide a method for aligning downlink control information, performed by a terminal. The method includes: determining a mode for aligning a payload of a first DCI with a payload of one of second DCIs according to a classification mode of a size of the first DCI, in which the first DCI is a DCI used for scheduling a multicast-broadcast scheduling (MBS) service, and the second DCI is a DCI used for scheduling a service other than the MBS service.

Optionally, determining the mode for aligning the payload of the first DCI with the payload of one of the second DCIs according to the classification mode of the size of the first DCI includes:
in a case where the classification mode of the size of the first DCI is classifying the first DCI as a DCI scrambled by a cell-radio network temporary identifier (C-RNTI), determining to align the payload of the first DCI with a payload of a second DCI transmitted in a common search space (CSS);
   or
in a case where the classification mode of the size of the first DCI is classifying the first DCI as a DCI scrambled by a C-RNTI, determining to align the payload of the first DCI with a payload of a second DCI transmitted in a user equipment (UE)-specific search space (USS);
   or
in a case where the classification mode of the size of the first DCI is classifying the first DCI as a DCI scrambled by a C-RNTI, determining a second DCI aligned with the first DCI according a format of the first DCI;
   or
in a case where the classification mode of the size of the first DCI is classifying the first DCI as a DCI scrambled by a radio network temporary identifier (RNTI) other than the C-RNTI, determining to align the payload of the first DCI with a payload of a second DCI scrambled by the RNTI other than the C-RNTI.

Optionally, determining the second DCI aligned with the first DCI according the format of the first DCI includes:
in a case where the format of the first DCI is format 1_0, determining that the second DCI whose payload is aligned with the payload of the first DCI is a second DCI scrambled by the RNTI other than the C-RNTI;
   or
in a case where the format of the first DCI is format 1_1 or format 1_2, and a current cell is configured with a second DCI having a same format as the first DCI, determining that the second DCI whose payload is aligned with the payload of the first DCI is a second DCI scrambled by the C-RNTI;
   or
in a case where the format of the first DCI is format 1_1 or format 1 2, and the current cell is not configured with a second DCI with a same format as the first DCI, determining that the second DCI whose payload is aligned with the payload of the first DCI is a specified second DCI, in which the specified second DCI is a DCI in format 1_1 or format 1_2.

Optionally, the method further includes:
in a case where a number of resource blocks (RBs) contained in a control resource set (CORESET) # 0 is greater than a number of RBs contained in a common frequency resource (CFR), determining frequency-domain resource allocation (FDRA) information according to N highest bits or N lowest bits in the first DCI;
   or
in a case where a number of RBs contained in an initial downlink (DL) bandwidth portion (BWP) is greater than the number of RBs contained in the CFR, determining the FDRA information according to the N highest bits or the N lowest bits in the first DCI;
N is a positive integer.

Optionally, the method further includes:
scaling a frequency-domain scheduling granularity of the first DCI in a case where the number of RBs contained in the CORESET # 0 is less than the number of RBs contained in the CFR;
   or
scaling a frequency-domain scheduling granularity of the first DCI in a case where the number of RBs contained in the initial DL BWP is less than the number of RBs contained in the CFR.

Optionally, scaling the frequency-domain scheduling granularity of the first DCI includes:
determining a scaling factor according to a ratio of the number of RBs contained in the CFR to the number of RBs contained in the CORESET # 0;
   or
determining a scaling factor according to a ratio of the number of RBs contained in the CFR to the number of RBs contained in the initial DL BWP.

In a third aspect, embodiments of the disclosure provide a communication device. The communication device has an ability to implement part of or all functions of the network device in the method described in the first aspect. For example, the communication device may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In a fourth aspect, embodiments of the disclosure provide a communication device. The communication device has an ability to implement part of or all functions of the terminal in the method described in the second aspect. For example, the communication device may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In a fifth aspect, embodiments of the disclosure provide a communication device. The communication device includes a processor. When the processor calls a computer program stored in a memory, the method described in the first aspect above is implemented.

In a sixth aspect, embodiments of the disclosure provide a communication device. The communication device includes a processor. When the processor calls a computer program stored in a memory, the method described in the second aspect above is implemented.

In a seventh aspect, embodiments of the disclosure provide a communication device. The communication device includes: a processor and a memory storing a computer program. When the processor executes the computer program, the communication device is caused to implement the method described in the first aspect above.

In an eighth aspect, embodiments of the disclosure provide a communication device. The communication device includes: a processor and a memory storing a computer program. When the processor executes the computer program, the communication device is caused to implement the method described in the second aspect above.

In a ninth aspect, embodiments of the disclosure provide a communication device. The communication device includes: a processor and an interface circuit. The interface circuit is configured to receive code instructions and transmit them to the processor. The processor is configured to run the code instructions to perform the method described in the first aspect above.

In a tenth aspect, embodiments of the disclosure provide a communication device. The communication device includes: a processor and an interface circuit. The interface circuit is configured to receive code instructions and transmit them to the processor. The processor is configured to run the code instructions to perform the method described in the second aspect above.

In an eleventh aspect, embodiments of the disclosure provide a communication system is provided. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

In a twelfth aspect, embodiments of the disclosure provide a computer-readable storage medium for storing instructions used by a network device. When the instructions are executed, the network device is caused to implement the method of the first aspect.

In a thirteenth aspect, embodiments of the disclosure provide a computer-readable storage medium for storing instructions used by a terminal. When the instructions are executed, the terminal is caused to implement the method of the second aspect.

In a fourteenth aspect, embodiments of the disclosure provide a computer program product including a computer program. When the computer program is run by a computer, the computer is caused to implement the method of the first aspect.

In a fifteenth aspect, embodiments of the disclosure provide a computer program product including a computer program. When the computer program is run by a computer, the computer is caused to implement the method of the second aspect.

In a sixteenth aspect, the disclosure provides a chip system including at least one processor and an interface, to support a network device in implementing the functions involved in the first aspect, such as determining or processing at least one of the data and information involved in the above method. In a possible design, the chip system further includes a memory for storing necessary computer programs and data for the network device. The chip system can be composed of chips or include a chip and other discrete components.

In a seventeenth aspect, the disclosure provides a chip system including at least one processor and an interface, to support a terminal in implementing the functions involved in the second aspect, such as determining or processing at least one of the data and information involved in the above method. In a possible design, the chip system further includes a memory for storing necessary computer programs and data for the terminal. The chip system can be composed of chips or include a chip and other discrete components.

In an eighteenth aspect, embodiments of the disclosure provide a computer program. When the computer program runs on a computer, the computer is caused to implement the method of the first aspect.

In a nineteenth aspect, embodiments of the disclosure provide a computer program. When the computer program runs on a computer, the computer is caused to implement the method of the second aspect.

Based on the above embodiments, the network device aligns the payload of the first DCI with the payload of one of the second DCIs according to the classification mode of the size of the first DCI, in which the first DCI is the DCI used for scheduling the MBS specific service, and the second DCI is the DCI used for scheduling the service other than the MBS specific service. In this way, the network device aligns the payload of the first DCI used for scheduling the MBS service with the payload of one of the second DCIs used for scheduling the service other than the MBS service, preventing a total number of DCI sizes sent by the network device from exceeding the capacity of the terminal.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a structural diagram of a communication system provided by an embodiment of the disclosure.
FIG. 2 is a flowchart of a method for aligning downlink control information provided by an embodiment of the disclosure.
FIG. 3 is a flowchart of a method for aligning downlink control information provided by an embodiment of the disclosure.
FIG. 4 is a flowchart of a method for aligning downlink control information provided by an embodiment of the disclosure.
FIG. 5 is a flowchart of a method for aligning downlink control information provided by an embodiment of the disclosure.
FIG. 6 is a flowchart of a method for aligning downlink control information provided by an embodiment of the disclosure.
FIG. 7 is a flowchart of a method for aligning downlink control information provided by an embodiment of the disclosure.
FIG. 8 is a flowchart of a method for aligning downlink control information provided by an embodiment of the disclosure.
FIG. 9 is a flowchart of a method for aligning downlink control information provided by an embodiment of the disclosure.
FIG. 10 is a flowchart of a method for aligning downlink control information provided by an embodiment of the disclosure.
FIG. 11 is a flowchart of a method for aligning downlink control information provided by an embodiment of the disclosure.
FIG. 12 is a flowchart of a method for aligning downlink control information provided by an embodiment of the disclosure.
FIG. 13 is a flowchart of a method for aligning downlink control information provided by an embodiment of the disclosure.
FIG. 14 is a block diagram of a communication device provided by an embodiment of the disclosure.
FIG. 15 is a block diagram of a communication device provided by an embodiment of the disclosure.
FIG. 16 is a schematic diagram of a chip provided by an embodiment of the disclosure.

### DETAILED DESCRIPTION

In order to better understand a method for aligning downlink control information disclosed in embodiments of the disclosure, a communication system used in the embodiments of the disclosure is firstly described below.

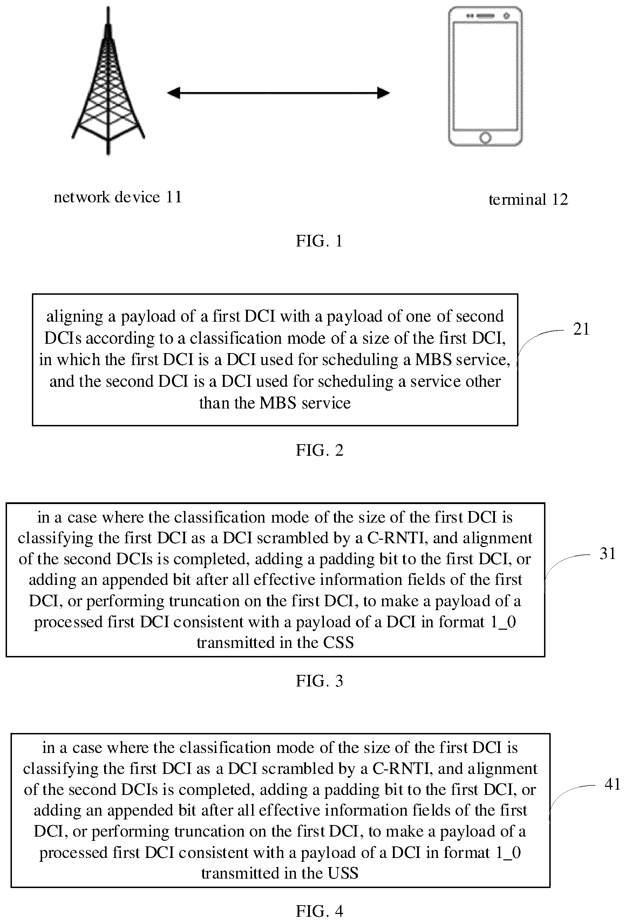

As illustrated in FIG. 1, FIG. 1 is a structural diagram of a communication system provided by an embodiment of the disclosure. The communication system may include, but is not limited to, a network device and a terminal. The number and form of devices shown in FIG. 1 are only for examples and do not constitute a limitation on the embodiments of the disclosure, and two or more network devices and two or more terminals may be included in practical applications. The communication system shown in FIG. 1 may include, for example, a network device 11 and a terminal 12.

It is noted that a technical solution of embodiments of the disclosure may be applied to various communication systems, such as, a long-term evolution (LTE) system, a fifth generation (5G) mobile communication system, a 5G new radio (NR) system, or other future new mobile communication systems.

The network device 11 in the embodiments of the disclosure may be an entity on a network side for transmitting or receiving signals. For example, the network device 11 may be an evolved NodeB (eNB), a transmission reception point (TRP), a next generation NodeB (gNB) in a new radio (NR) system, a base station in other future mobile communication systems or an access node in a wireless fidelity (Wi-Fi) system. The specific technology and specific device form used by the network device are not limited in the embodiments of the disclosure.

The terminal 12 in the embodiments of the disclosure is an entity on a user side for receiving or transmitting signals, such as a cellular phone. The terminal may also be referred to as a terminal device, user equipment (UE), a mobile station (MS), a mobile terminal (MT), and the like. The terminal can be a vehicle with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new service scenarios emerge, the technical solutions provided by the embodiments of the disclosure are also applicable to similar technical problems.

A method for aligning downlink control information and an apparatus for aligning downlink control information may be introduced in detail below with reference to the accompanying drawings.

As illustrated in FIG. 2, FIG. 2 is a flowchart of a method for aligning downlink control information (DCI) provided by an embodiment of the disclosure. It should be noted that the method is performed by a network device. As shown in FIG. 2, the method may include, but is not limited to, the following steps.

Step 21, a payload of a first DCI is aligned with a payload of one of second DCIs according to a classification mode of a size of the first DCI, in which the first DCI is a DCI used for scheduling a multicast-broadcast scheduling (MBS) service, and the second DCI is a DCI used for scheduling a service other than the MBS service.

It should be noted that, in scheduling the MBS service, a frequency domain resource allocation (FDRA) field of the first DCI used for scheduling the MBS service is determined according to a common frequency resource (CFR) at the network device side, and an information field contained in the first DCI may be different from an information field contained in the second DCI. Therefore, a total number of DCIs configured by the network device may exceed a maximum capacity of DCI blind detection of a terminal, which is a number up to 3+1. Thus, the payload of the first DCI may be aligned with the payload of one of the second DCIs, so that a number of DCIs that is to be detected by the terminal does not exceed the limit of DCI budget, i.e., 3+1.

In the disclosure, the second DCIs used for scheduling other services can be aligned first according to a DCI alignment operation in Rel-15/16, and then the payload of the first DCI is aligned with the payload of one of the second DCIs. Alternatively, the payload of the first DCI can be aligned with the payload of one of the second DCIs during the process of aligning the payloads of the second DCIs.

Optionally, the network device can align the payload of the first DCI with the payload of one of the second DCIs according to the classification mode of the size of the first DCI in a case where the payload of the first DCI is different from a payload of each second DCI.

Optionally, in the case where the classification mode of the size of the first DCI is classifying the first DCI as a DCI scrambled by a cell-radio network temporary identifier (C-RNTI), and alignment of other second DCIs is completed, the payload of the first DCI is aligned with a payload of one of second DCIs transmitted in a Common Search Space (CSS) or a User equipment (UE)-specific Search Space (USS).

Optionally, in a case where the classification mode of the size of the first DCI is classifying the first DCI as a DCI scrambled by a radio network temporary identifier (RNTI) other than the C-RNTI, the payload of the first DCI is aligned with a payload of a second DCI scrambled by the RNTI other than the C-RNTI.

Optionally, in a case where the classification mode of the size of the first DCI is classifying the first DCI as a DCI scrambled by the C-RNTI, and alignment of the other second DCIs is not completed, the payload of the first DCI is aligned with the payload of one of the second DCIs based on a format of the first DCI.

By implementing embodiments of the disclosure, the network device aligns the payload of the first DCI with the payload of one of the second DCIs according to the classification mode of the size of the first DCI. The first DCI is the DCI used for scheduling the MBS specific service, and the second DCI is the DCI used for scheduling the service other than the MBS specific service. Therefore, the payload of the first DCI used for scheduling the MBS service is aligned with the payload of one of the second DCIs used for scheduling the service other than the MBS service, a total number of DCI sizes sent by the network device is prevented from exceeding the capacity of a terminal.

As illustrated in FIG. 3, FIG. 3 is a flowchart of a method for aligning DCI provided by an embodiment of the disclosure. The method is performed by a network device. As shown in FIG. 3, the method may include, but is not limited to, the following steps.

Step 31, in a case where a classification mode of a size of a first DCI is classifying the first DCI as a DCI scrambled by a C-RNTI, and alignment of other second DCIs is completed, a padding bit is added to the first DCI, or an appended bit is added after all effective information fields of the first DCI, or truncation is performed on the first DCI, to make a payload of a processed first DCI consistent with a payload of a DCI in format1_0 transmitted in a CSS.

In embodiments of the disclosure, the network device configures a MBS service for a terminal, and the MBS service is scheduled by the DCI in format 1_0 scrambled by a group-RNTI (G-RNTI). If the size of the DCI in format 1_0 scrambled by the G-RNTI is counted to be within the "3" in the DCI budget "3+1", analysis about the number of sizes is performed by classifying the first DCI as the DCI scrambled by the C-RNTI.

In the case of classifying the first DCI as the DCI scrambled by the C-RNTI for the analysis about the number of sizes, alignment between a second DCI in format 0_0 and a second DCI in format 1_0 transmitted in the CSS and the USS, a second DCI in format 0_1 and a second DCI in format 1_1 transmitted in the USS, and a second DCI in format 0_2 and a second DCI in format 1_2 transmitted in the USS may be completed based on an alignment operation in Rel-16, to meet the DCI budget requirement of "3+1". After that, in a case where the number of second DCIs with different sizes scrambled by the C-RNTI configured by a cell reaches 3, and a size of the first DCI is different from any of the sizes of the second DCIs, the payload of the first DCI is aligned with a payload of the second DCI in a format of format 1_0 transmitted in the CSS.

Optionally, if the payload of the first DCI is smaller than the payload of a DCI in a format of format 1_0 transmitted in the CSS, a bit padding bit can be added to the first DCI, or an appended bit can be added after all effective information fields of the first DCI, so that the payload of the processed first DCI is consistent with the payload of the DCI in the format of format 1_0 transmitted in the CSS.

Optionally, if the payload of the first DCI is greater than the payload of the DCI in the format of format 1_0 transmitted in the CSS, truncation may be performed on the first DCI, so that the payload of the processed first DCI is consistent with the payload of the DCI in the format of format 1_0 transmitted in the CSS.

Optionally, if the payload of the first DCI is greater than the payload of the DCI in the format of format 1_0 transmitted in the CSS, the truncation may be performed on a FDRA field of the first DCI.

For example, if the payload of the first DCI is greater than the payload of the DCI in the format of format 1_0 transmitted in the CSS by N bits, the network device may delete the highest N bits of the FDRA field in the first DCI when sending the first DCI to the terminal, thereby completing the truncation operation on the FDRA field in the first DCI and the entire DCI format.

Optionally, when determining a length of the FDRA field of the first DCI, a bit width can be determined based on a number of resource blocks (RBs) contained in a CFR. Alternatively, the bit width can be determined based on a number of RBs contained in a control resource set (CORESET) # 0. Alternatively, the bit width can be determined based on a number of RBs contained in an initial downlink (DL) bandwidth portion (BWP).

Optionally, after performing the truncation on the FDRA field of the first DCI, a frequency-domain scheduling power can be scaled. For example, after the FDRA field of the first DCI is truncated by N bits, a frequency-domain resource scheduling granularity can be changed from original M consecutive RBs to 2^{N} × M consecutive RBs.

By implementing embodiments of the disclosure, in the case where the classification mode of the size of the first DCI is classifying the first DCI as the DCI scrambled by the C-RNTI, and alignment of the second DCIs is completed, the network device adds the padding bit to the first DCI, or adds the appended bit after all effective information fields of the first DCI, or performs truncation on the first DCI, to make the payload of the processed first DCI consist with the payload of the DCI with the format of format 1_0 transmitted in the CSS. Therefore, the payload of the first DCI used for scheduling the MBS service is aligned with the payload of the DCI with a format of format 1_0 transmitted in the CSS, a total number of DCI sizes sent by the network device is prevented from exceeding the capacity of the terminal.

As illustrated in FIG. 4, FIG. 4 is a flowchart of a method for aligning DCI provided by an embodiment of the disclosure. The method is performed by a network device. As shown in FIG. 4, the method may include, but is not limited to, the following steps.

Step 41, in a case where a classification mode of a size of a first DCI is classifying the first DCI as a DCI scrambled by a C-RNTI, and alignment of other second DCIs is completed, a padding bit is added to the first DCI, or an appended bit is added after all effective information fields of the first DCI, or truncation is performed on the first DCI, to make a payload of a processed first DCI consistent with a payload of a DCI in format 1_0 transmitted in a USS.

In embodiments of the disclosure, the network device configures a MBS service for a terminal, and the MBS service is scheduled by the DCI in format 1_0 scrambled by the G-RNTI. If the size of the DCI in format 1_0 scrambled by the G-RNTI is counted to be within the "3" in the DCI budget "3+1", analysis about the number of sizes is performed by classifying the first DCI as the DCI scrambled by the C-RNTI.

In the case of classifying the first DCI as the DCI scrambled by the C-RNTI for the analysis about the number of sizes, alignment between a second DCI in format 0_0 and a second DCI in format 1_0 transmitted in the CSS and the USS, a second DCI in format 0_1 and a second DCI in format 1_1 transmitted in the USS, and a second DCI in format 0_2 and a second DCI in format 1_2 transmitted in the USS may be completed based on an alignment operation in Rel-16, to meet the DCI budget requirement of "3+1". After that, in a case where the number of second DCIs with different sizes scrambled by the C-RNTI configured by a cell reaches 3, and a size of the first DCI is different from any of the sizes of the second DCIs, the payload of the first DCI is aligned with a payload of the second DCI in a format of format 1_0 transmitted in the USS.

Optionally, if the payload of the first DCI is smaller than the payload of a DCI in a format of format 1_0 transmitted in the USS, a bit padding bit can be added to the first DCI, or an appended bit can be added after all effective information fields of the first DCI, so that the payload of the processed first DCI is consistent with the payload of the DCI in the format of format 1_0 transmitted in the USS.

Optionally, if the payload of the first DCI is greater than the payload of the DCI in the format of format 1_0 transmitted in the USS, truncation may be performed on the first DCI, so that the payload of the processed first DCI is consistent with the payload of the DCI in the format of format 1_0 transmitted in the USS.

Optionally, if the payload of the first DCI is greater than the payload of the DCI in the format of format 1_0 transmitted in the USS, the truncation may be performed on a FDRA field of the first DCI.

For example, if the payload of the first DCI is greater than the payload of the DCI in the format of format 1_0 transmitted in the USS by N bits, the network device may delete the highest N bits of the FDRA field in the first DCI when sending the first DCI to the terminal, thereby completing the truncation operation on the FDRA field in the first DCI and the entire DCI format.

Optionally, when determining a length of the FDRA field of the first DCI, a bit width can be determined based on a number of RBs contained in a CFR. Alternatively, the bit width can be determined based on a number of RBs contained in a CORESET # 0. Alternatively, the bit width can be determined based on a number of RBs contained in an initial DL BWP.

Optionally, after performing the truncation on the FDRA field of the first DCI, a frequency-domain scheduling power can be scaled. For example, after the FDRA field of the first DCI is truncated by N bits, a frequency-domain resource scheduling granularity can be changed from original M consecutive RBs to 2^{N} × M consecutive RBs.

By implementing embodiments of the disclosure, in the case where the classification mode of the size of the first DCI is classifying the first DCI as the DCI scrambled by the C-RNTI, and alignment of the second DCIs is completed, the network device adds the padding bit to the first DCI, or adds the appended bit after all effective information fields of the first DCI, or performs truncation on the first DCI, to make the payload of the processed first DCI consist with the payload of the DCI with the format of format 1_0 transmitted in the USS. Therefore, the payload of the first DCI used for scheduling the MBS service is aligned with the payload of the DCI with a format of format 1_0 transmitted in the USS, a total number of DCI sizes sent by the network device is prevented from exceeding the capacity of the terminal.

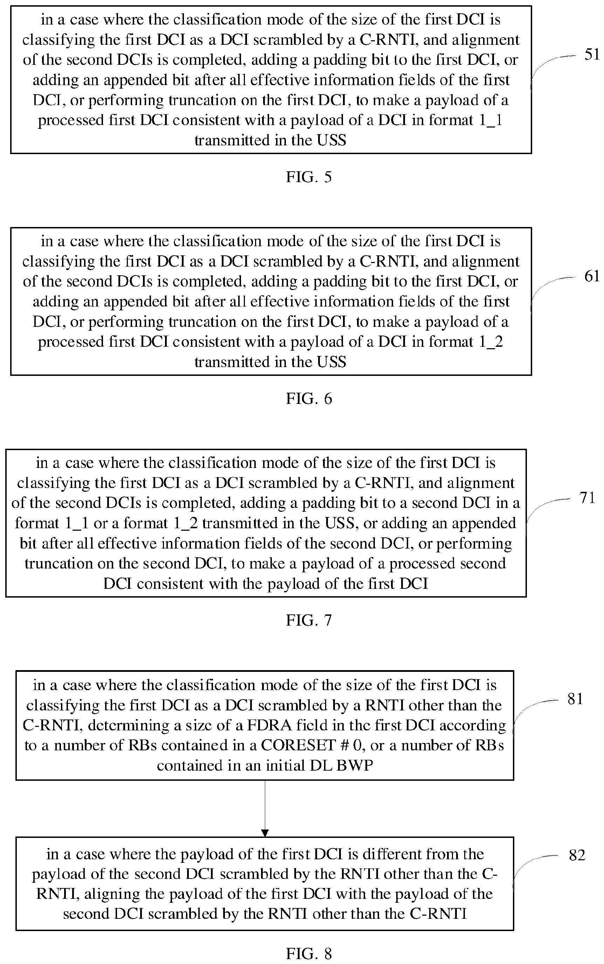

As illustrated in FIG. 5, FIG. 5 is a flowchart of a method for aligning DCI provided by an embodiment of the disclosure. The method is performed by a network device. As shown in FIG. 5, the method may include, but is not limited to, the following steps.

Step 51, in a case where a classification mode of a size of a first DCI is classifying the first DCI as a DCI scrambled by a C-RNTI, and alignment of other second DCIs is completed, a padding bit is added to the first DCI, or an appended bit is added after all effective information fields of the first DCI, or truncation is performed on the first DCI, to make a payload of a processed first DCI consistent with a payload of a DCI in format 1_1 transmitted in a USS.

In embodiments of the disclosure, the network device configures a MBS service for a terminal, and the MBS service is scheduled by the DCI in format 1_1 scrambled by the G-RNTI. If the size of the DCI in format 1_1 scrambled by the G-RNTI is counted to be within the "3" in the DCI budget "3+1", analysis about the number of sizes is performed by classifying the first DCI as the DCI scrambled by the C-RNTI.

In the case of classifying the first DCI as the DCI scrambled by the C-RNTI for the analysis about the number of sizes, alignment between a second DCI in format 0_0 and a second DCI in format 1_0 transmitted in the CSS and the USS, a second DCI in format 0_1 and a second DCI in format 1_1 transmitted in the USS, and a second DCI in format 0_2 and a second DCI in format 1_2 transmitted in the USS may be completed based on an alignment operation in Rel-16, to meet the DCI budget requirement of "3+1". After that, in a case where the number of second DCIs with different sizes scrambled by the C-RNTI configured by a cell reaches 3, and a size of the first DCI is different from any of the sizes of the second DCIs, the payload of the first DCI is aligned with a payload of the second DCI in a format of format 1_1 transmitted in the USS.

Optionally, if the payload of the first DCI is smaller than the payload of a DCI in a format of format 1_1 transmitted in the USS, a bit padding bit can be added to the first DCI, or an appended bit can be added after all effective information fields of the first DCI, so that the payload of the processed first DCI is consistent with the payload of the DCI in the format of format 1_1 transmitted in the USS.

Optionally, if the payload of the first DCI is greater than the payload of the DCI in the format of format 1_1 transmitted in the USS, truncation may be performed on the first DCI, so that the payload of the processed first DCI is consistent with the payload of the DCI in the format of format 1_1 transmitted in the USS.

Optionally, if the payload of the first DCI is greater than the payload of the DCI in the format of format 1_1 transmitted in the USS, the truncation may be performed on a FDRA field of the first DCI.

For example, if the payload of the first DCI is greater than the payload of the DCI in the format of format 1_1 transmitted in the USS by N bits, the network device may delete the highest N bits of the FDRA field in the first DCI when sending the first DCI to the terminal, thereby completing the truncation operation on the FDRA field in the first DCI and the entire DCI format.

Optionally, when determining a length of the FDRA field of the first DCI, a bit width can be determined based on a number of RBs contained in a CFR. Alternatively, the bit width can be determined based on a number of RBs contained in a CORESET # 0. Alternatively, the bit width can be determined based on a number of RBs contained in an initial DL BWP.

Optionally, after performing the truncation on the FDRA field of the first DCI, a frequency-domain scheduling power can be scaled. For example, after the FDRA field of the first DCI is truncated by N bits, a frequency-domain resource scheduling granularity can be changed from original M consecutive RBs to 2^{N} × M consecutive RBs.

By implementing embodiments of the disclosure, in the case where the classification mode of the size of the first DCI is classifying the first DCI as the DCI scrambled by the C-RNTI, and alignment of the second DCIs is completed, the network device adds the padding bit to the first DCI, or adds the appended bit after all effective information fields of the first DCI, or performs truncation on the first DCI, to make the payload of the processed first DCI consist with the payload of the DCI with the format of format 1_1 transmitted in the USS. Therefore, the payload of the first DCI used for scheduling the MBS service is aligned with the payload of the DCI with a format of format 1_1 transmitted in the USS, a total number of DCI sizes sent by the network device is prevented from exceeding the capacity of the terminal.

As illustrated in FIG. 6, FIG. 6 is a flowchart of a method for aligning DCI provided by an embodiment of the disclosure. The method is performed by a network device. As shown in FIG. 6, the method may include, but is not limited to, the following steps.

Step 61, in a case where a classification mode of a size of a first DCI is classifying the first DCI as a DCI scrambled by a C-RNTI, and alignment of other second DCIs is completed, a padding bit is added to the first DCI, or an appended bit is added after all effective information fields of the first DCI, or truncation is performed on the first DCI, to make a payload of a processed first DCI consistent with a payload of a DCI in format 1_2 transmitted in a USS.

In embodiments of the disclosure, the network device configures a MBS service for a terminal, and the MBS service is scheduled by the DCI in format 1_2 scrambled by the G-RNTI. If the size of the DCI in format 1_2 scrambled by the G-RNTI is counted to be within 3 in the DCI budget "3+1", analysis about the number of sizes is performed by classifying the first DCI as the DCI scrambled by the C-RNTI.

In the case of classifying the first DCI as the DCI scrambled by the C-RNTI for the analysis about the number of sizes, alignment between a second DCI in format 0_0 and a second DCI in format 1_0 transmitted in the CSS and the USS, a second DCI in format 0_1 and a second DCI in format 1_1 transmitted in the USS, and a second DCI in format 0_2 and a second DCI in format 1_2 transmitted in the USS may be completed based on an alignment operation in Rel-16, to meet the DCI budget requirement of "3+1". After that, in a case where the number of second DCIs with different sizes scrambled by the C-RNTI configured by a cell reaches 3, and a size of the first DCI is different from any of the sizes of the second DCIs, the payload of the first DCI is aligned with a payload of the second DCI in a format of format 1_2 transmitted in the USS.

Optionally, if the payload of the first DCI is smaller than the payload of a DCI in a format of format 1_2 transmitted in the USS, a bit padding bit can be added to the first DCI, or an appended bit can be added after all effective information fields of the first DCI, so that the payload of the processed first DCI is consistent with the payload of the DCI in the format of format 1_2 transmitted in the USS.

Optionally, if the payload of the first DCI is greater than the payload of the DCI in the format of format 1_2 transmitted in the USS, truncation may be performed on the first DCI, so that the payload of the processed first DCI is consistent with the payload of the DCI in the format of format 1_2 transmitted in the USS.

Optionally, if the payload of the first DCI is greater than the payload of the DCI in the format of format 1_2 transmitted in the USS, the truncation may be performed on a FDRA field of the first DCI.

For example, if the payload of the first DCI is greater than the payload of the DCI in the format of format 1_2 transmitted in the USS by N bits, the network device may delete the highest N bits of the FDRA field in the first DCI when sending the first DCI to the terminal, thereby completing the truncation operation on the FDRA field in the first DCI and the entire DCI format.

Optionally, when determining a length of the FDRA field of the first DCI, a bit width can be determined based on a number of RBs contained in a CFR. Alternatively, the bit width can be determined based on a number of RBs contained in a CORESET # 0. Alternatively, the bit width can be determined based on a number of RBs contained in an initial DL BWP.

Optionally, after performing the truncation on the FDRA field of the first DCI, a frequency-domain scheduling power can be scaled. For example, after the FDRA field of the first DCI is truncated by N bits, a frequency-domain resource scheduling granularity can be changed from original M consecutive RBs to 2^{N} × M consecutive RBs.

By implementing embodiments of the disclosure, in the case where the classification mode of the size of the first DCI is classifying the first DCI as the DCI scrambled by the C-RNTI, and alignment of the second DCIs is completed, the network device adds the padding bit to the first DCI, or adds the appended bit after all effective information fields of the first DCI, or performs truncation on the first DCI, to make the payload of the processed first DCI consist with the payload of the DCI with the format of format 1_2 transmitted in the USS. Therefore, the payload of the first DCI used for scheduling the MBS service is aligned with the payload of the DCI with a format of format 1_2 transmitted in the USS, a total number of DCI sizes sent by the network device is prevented from exceeding the capacity of the terminal.

As illustrated in FIG. 7, FIG. 7 is a flowchart of a method for aligning DCI provided by an embodiment of the disclosure. The method is performed by a network device. As shown in FIG. 7, the method may include, but is not limited to, the following steps.

Step 71, in a case where a classification mode of a size of a first DCI is classifying the first DCI as a DCI scrambled by a C-RNTI, and alignment of other second DCIs is completed, a padding bit is added to a second DCI in a format 1_1 or a format 1_2 transmitted in the USS, or an appended bit is added after all effective information fields of the second DCI, or truncation is performed on the second DCI, to make a payload of a processed second DCI consistent with a payload of the first DCI.

In embodiments of the disclosure, the network device configures a MBS service for a terminal, and the MBS service is scheduled by the DCI in format 1_1 or the DCI in format 1_2 scrambled by the G-RNTI. If the size of the DCI in format 1_1 or the DCI in format 1_2 scrambled by the G-RNTI is counted to be within the "3" in the DCI budget "3+1", analysis about and the number of sizes is performed by classifying the first DCI as the DCI scrambled by the C-RNTI.

In the case of classifying the first DCI as the DCI scrambled by the C-RNTI for the analysis about the number of sizes, alignment between a second DCI in format 0_0 and a second DCI in format 1_0 transmitted in the CSS and the USS, a second DCI in format 0_1 and a second DCI in format 1_1 transmitted in the USS, and a second DCI in format 0_2 and a second DCI in format 1_2 transmitted in the USS may be completed based on an alignment operation in Rel-16, to meet the DCI budget requirement of "3+1". After that, in a case where the number of second DCIs with different sizes scrambled by the C-RNTI configured by a cell reaches 3, and a size of the first DCI is different from any of the sizes of the second DCIs, the payload of the first DCI is aligned with a payload of the second DCI in the format of format 1_1 or format 1_2 transmitted in the USS.

Optionally, if the payload of the first DCI is smaller than the payload of the second DCI in the format of format 1_1 or format 1_2 transmitted in the USS, a bit padding bit can be added to the second DCI in the format of format 1_1 or format 1_2, or an appended bit can be added after all effective information fields of the second DCI in the format of format 1_1 or format 1_2, so that the payload of the processed second DCI is consistent with the payload of the first DCI.

Optionally, if the payload of the first DCI is greater than the payload of the DCI in the format of format 1_2 transmitted in the USS, truncation may be performed on the second DCI in the format of format 1_1 or format 1_2 transmitted in the USS, so that the payload of the processed second DCI is consistent with the payload of the first DCI.

Optionally, when determining a length of the FDRA field of the first DCI, a bit width can be determined based on a number of RBs contained in a CFR. Alternatively, the bit width can be determined based on a number of RBs contained in a CORESET # 0. Alternatively, the bit width can be determined based on a number of RBs contained in an initial DL BWP.

By implementing embodiments of the disclosure, in the case where the classification mode of the size of the first DCI is classifying the first DCI as the DCI scrambled by the C-RNTI, and alignment of the second DCIs is completed, the network device adds the padding bit to the second DCI in the format of format 1_1 or format 1_2 transmitted in the USS, or adds the appended bit after all effective information fields of the above second DCI, or performs truncation on the above second DCI, to make the payload of the processed second DCI consist with the payload of the first DCI. Therefore, the network device aligns the payload of the second DCI in the format of format 1_1 or format 1_2 transmitted in the USS with the payload of the first DCI used for scheduling the MBS service, thus, a total number of DCI sizes sent by the network device is prevented from exceeding the capacity of the terminal.

As illustrated in FIG. 8, FIG. 8 is a flowchart of a method for aligning DCI provided by an embodiment of the disclosure. The method is performed by a network device. As shown in FIG. 8, the method may include, but is not limited to, the following steps.

Step 81, in a case where a classification mode of a size of a first DCI is classifying the first DCI as a DCI scrambled by an RNTI other than the C-RNTI, a size of a FDRA field in the first DCI is determined according to a number of RBs contained in a CORESET # 0, or a number of RBs contained in an initial DL BWP.

In embodiments of the disclosure, the network device configures a MBS service for a terminal, and the MBS service is scheduled by a DCI in format 1_0 scrambled by the G-RNTI. If the size of the DCI in format 1_1 or the DCI in format 1_2 scrambled by the G-RNTI is counted to be within the "3" in the DCI budget "3+1", analysis about the number of sizes is performed by classifying the first DCI as the DCI scrambled by the RNTI other than the C-RNTI.

Optionally, determining the size of the FDRA field in the first DCI according to the number of RBs contained in the CORESET # 0 may include:

in a case where the number of RBs contained in the CORESET # 0 is greater than a number of RBs contained in a CFR, determining FDRA information according to N highest bits or N lowest bits in the first DCI. N is a positive number.

Alternatively, a frequency-domain scheduling granularity of the first DCI is scaled in a case where the number of RBs contained in the CORESET # 0 is less than a number of RBs contained in a CFR.

Optionally, a scaling factor for scaling the frequency-domain scheduling granularity of the first DCI may be determined according to a ratio of the number of RBs contained in the CFR to the number of RBs contained in the CORESET # 0.

Optionally, determining the size of the FDRA field in the first DCI according to the number of RBs contained in the initial DL BWP may include:

in a case where the number of RBs contained in the initial DL BWP is greater than the number of RBs contained in the CFR, determining the FDRA information according to the N highest bits or the N lowest bits in the first DCI.

Alternatively, the frequency-domain scheduling granularity of the first DCI is scaled in a case where the number of RBs contained in the initial DL BWP is less than the number of RBs contained in the CFR.

Optionally, a scaling factor may be determined according to a ratio of the number of RBs contained in the CFR to the number of RBs contained in the DL BWP.

Step 82, in a case where the payload of the first DCI is different from the payload of the second DCI scrambled by the RNTI other than the C-RNTI, the payload of the first DCI is aligned with the payload of the second DCI scrambled by the RNTI other than the C-RNTI.

It should be noted that, if the payload of the first DCI is still different from the payload of the second DCI scrambled by the RNTI other than the C-RNTI after determining the size of the FDRA field of the first DCI, a padding bit can be added to the first DCI, or an appended bit can be added after all effective information fields of the first DCI, or truncation can be performed on the first DCI, to make the payload of the processed first DCI align with the payload of the second DCI scrambled by the RNTI other than the C-RNTI.

Optionally, in a case where the payload of the first DCI is smaller than the payload of the second DCI scrambled by the RNTI other than the C-RNTI, a padding bit is added to the first DCI, or an appended bit is added after all effective information fields of the first DCI.

Alternatively, in a case where the payload of the first DCI is greater than the payload of the second DCI scrambled by the RNTI other than the C-RNTI, truncation is performed on the first DCI.

Optionally, in a case where the payload of the first DCI is greater than the payload of the second DCI scrambled by the RNTI other than the C-RNTI, the FDRA field in the first DCI can be truncated first.

By implementing embodiments of the disclosure, in the case where the classification mode of the size of the first DCI is classifying the first DCI as the DCI scrambled by the RNTI other than the C-RNTI, the network device determines the size of the FDRA field in the first DCI according to the number of RB contained in the CORESET # 0, or the number of RBs contained in the initial DL BWP. If the payload of the first DCI is different from the payload of the second DCI scrambled by the RNTI other than the C-RNTI, the payload of the first DCI is aligned with the payload of the second DCI scrambled by the RNTI other than the C-RNTI. In this way, the network device aligns the payload of the first DCI used for scheduling the MBS service with the payload of the second DCI scrambled by the RNTI other than the C-RNTI, preventing a total number of DCI sizes sent by the network device from exceeding the capacity of the terminal.

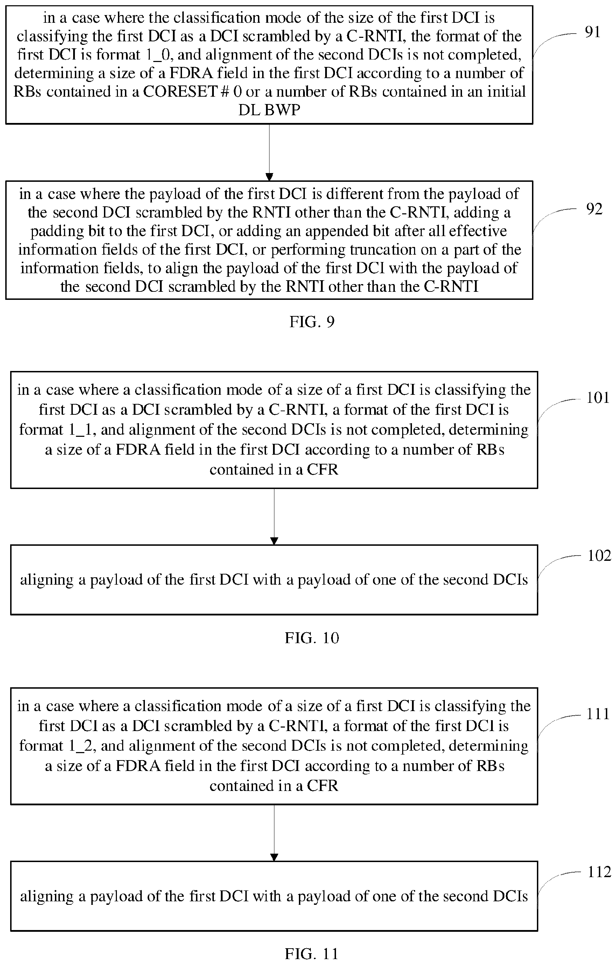

As illustrated in FIG. 9, FIG. 9 is a flowchart of a method for aligning DCI provided by an embodiment of the disclosure. The method is performed by a network device. As shown in FIG. 9, the method may include, but is not limited to, the following steps.

Step 91, in a case where a classification mode of a size of a first DCI is classifying the first DCI as a DCI scrambled by a C-RNTI, a format of the first DCI is format 1_0, and alignment of the second DCIs is not completed, a size of a FDRA field in the first DCI is determined according to a number of RBs contained in a CORESET # 0 or a number of RBs contained in an initial DL BWP.

In embodiments of the disclosure, the network device configures a MBS service for a terminal, and the MBS service is scheduled by a DCI scrambled by the G-RNTI. If the size of the DCI format scrambled by the G-RNTI is counted to be within the "3" in the DCI budget "3+1", analysis about the number of sizes is performed by classifying the first DCI as the DCI scrambled by the C-RNTI.

In embodiments of the disclosure, when performing the alignment operation between a second DCI in format 0_0 and a second DCI in format 1_0 transmitted in a CSS and a USS, a second DCI in format 0_1 and a second DCI in format 1_1 transmitted in the USS, and a second DCI in format 0_2 and a second DCI in format 1_2 transmitted in the USS, the payload of the first DCI used for scheduling the MBS service is aligned with the second DCI scrambled by the RNTI other than the C- RNTI, so that the DCI configured by the network device for the terminal meets the 3+1 DCI budget requirement.

Optionally, in a case where the number of RBs contained in the CORESET # 0 is greater than a number of RBs contained in a CFR, or in a case where the number of RBs contained in the initial DL BWP is greater than the number of RBs contained in the CFR, FDRA information is determined according to N highest bits or N lowest bits in the first DCI. N is a positive integer.

Alternatively, in a case where the number of RBs contained in the CORESET # 0 is less than a number of RBs contained in a CFR, or in a case where the number of RBs contained in the initial DL BWP is less than the number of RBs contained in the CFR, the frequency-field scheduling granularity of the first DCI is scaled.

Optionally, a scaling factor is determined according to a ratio of the number of RBs contained in the CFR to the number of RBs contained in the CORESET # 0. Or, the scaling factor is determined according to a ratio of the number of RBs contained in the CFR to the number of RBs contained in the DL BWP.

Step 92, in a case where the payload of the first DCI is different from a payload of a second DCI scrambled by a RNTI other than the C-RNTI, a padding bit is added to the first DCI, or an appended bit is added after all effective information fields of the first DCI, or truncation is performed on some information fields, to align the payload of the first DCI with the payload of the second DCI scrambled by the RNTI other than the C-RNTI.

By implementing embodiments of the disclosure, in the case where the classification mode of the size of the first DCI is classifying the first DCI as the DCI scrambled by the C-RNTI, the format of the first DCI is format 1_0, and alignment of the second DCIs is not completed, the network device determines the size of the FDRA field in the first DCI according to the number of RBs contained in the CORESET # 0 or the initial DL BWP. In a case where the payload of the first DCI is different from the payload of the second DCI scrambled by the RNTI other than the C-RNTI, the padding bit is added to the first DCI, or the appended bit is added after all effective information fields of the first DCI, or the truncation is performed on some information fields, to align the payload of the first DCI with the payload of the second DCI scrambled by the RNTI other than the C-RNTI. In this way, the network device aligns the payload of the first DCI used for scheduling the MBS service with the payload of the second DCI scrambled by the RNTI other than the C-RNTI, preventing a total number of DCI sizes sent by the network device from exceeding the capacity of the terminal.

As illustrated in FIG. 10, FIG. 10 is a flowchart of a method for aligning DCI provided by an embodiment of the disclosure. The method is performed by a network device. As shown in FIG. 10, the method may include, but is not limited to, the following steps.

Step 101, in a case where a classification mode of a size of a first DCI is classifying the first DCI as a DCI scrambled by a C-RNTI, a format of the first DCI is format 1_1, and alignment of the second DCIs is not completed, a size of a FDRA field in the first DCI is determined according to a number of RBs contained in a CFR.

Step 102, the payload of the first DCI is aligned with the payload of one of the second DCIs.

Optionally, in a case where a current cell is configured with a second DCI having a same format as the first DCI, the payload of the first DCI is aligned with a payload of the second DCI having the same format as the first DCI and scrambled by the C-RNTI.

Or, in a case where the current cell is not configured with a second DCI having a same format as the first DCI, the payload of the first DCI is aligned with a payload of a specified second DCI. The specified second DCI is a DCI in format 1_1.

Optionally, in a case where the payload of the first DCI is smaller than a payload of a second DCI in format 1_1, a padding bit is added to the first DCI, or an appended bit is added after an information field of the first DCI, to align the payload of the first DCI with the payload of the second DCI in format 1_1.

Or, in a case where the payload of the first DCI is greater than the payload of the second DCI in format 1_1, truncation is performed on the first DCI, to align the payload of the first DCI with the payload of the second DCI in format 1_1.

Optionally, in the case where the payload of the first DCI is smaller than the payload of the second DCI in format 1_1, the padding bit may be added to a FDRA field of the first DCI.

Optionally, in the case where the payload of the first DCI is greater than the payload of the second DCI in format 1_1, the FDRA field of the first DCI may be truncated.

By implementing embodiments of the disclosure, in the case where the first DCI is classified as the DCI scrambled by the C-RNTI, the format of the first DCI is format 1_1, and alignment of the second DCIs is not completed, the network device determines the size of the FDRA field in the first DCI according to the number of RBs contained in the CFR, and aligns the payload of the first DCI with the payload of one of the second DCIs. In this way, in the case where the alignment of the second DCIs is not completed, the network device aligns the payload of the first DCI used for scheduling the MBS service with the payload of the second DCI having the same format as the first DCI, preventing a total number of DCI sizes sent by the network device from exceeding the capacity of the terminal.

As illustrated in FIG. 11, FIG. 11 is a flowchart of a method for aligning DCI provided by an embodiment of the disclosure. The method is performed by a network device. As shown in FIG. 11, the method may include, but is not limited to, the following steps.

Step 111, in a case where a classification mode of a size of a first DCI is classifying the first DCI as a DCI scrambled by a C-RNTI, a format of the first DCI is format 1_1, and alignment of the second DCIs is not completed, a size of a FDRA field in the first DCI is determined according to a number of RBs contained in a CFR.

Step 112, the payload of the first DCI is aligned with the payload of one of the second DCIs.

Optionally, in a case where a current cell is configured with a second DCI having a same format as the first DCI, the payload of the first DCI is aligned with a payload of the second DCI having the same format as the first DCI and scrambled by the C-RNTI.

Or, in a case where the current cell is not configured with a second DCI having a same format as the first DCI, the payload of the first DCI is aligned with a payload of a specified second DCI. The specified second DCI is a DCI in format 1_2.

Optionally, in a case where the payload of the first DCI is smaller than a payload of a second DCI in format 1_2, a padding bit is added to the first DCI, or an appended bit is added after an information field of the first DCI, to align the payload of the first DCI with the payload of the second DCI in format 1_2.

Or, in a case where the payload of the first DCI is greater than the payload of the second DCI in format 1_2, truncation is performed on the first DCI, to align the payload of the first DCI with the payload of the second DCI in format 1_1.

Optionally, in the case where the payload of the first DCI is smaller than the payload of the second DCI in format 1_2, the padding bit may be added to a FDRA field of the first DCI.

Optionally, in the case where the payload of the first DCI is greater than the payload of the second DCI in format 1_2, the FDRA field of the first DCI may be truncated.

By implementing embodiments of the disclosure, in the case where the classification mode of the size of the first DCI is classifying the first DCI as the DCI scrambled by the C-RNTI, the format of the first DCI is format 1_2, and alignment of the second DCIs is not completed, the network device determines the size of the FDRA field in the first DCI according to the number of RBs contained in the CFR, and aligns the payload of the first DCI with the payload of one of the second DCIs. In this way, in the case where the alignment of the second DCIs is not completed, the network device aligns the payload of the first DCI used for scheduling the MBS service with the payload of the second DCI having the same format as the first DCI, preventing a total number of DCI sizes sent by the network device from exceeding the capacity of the terminal.

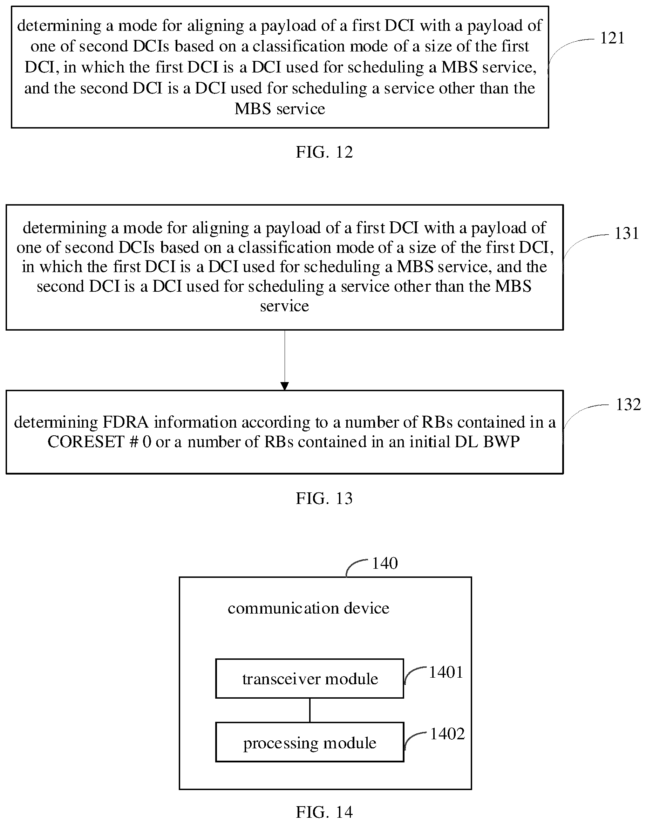

As illustrated in FIG. 12, FIG. 12 is a flowchart of a method for aligning DCI provided by an embodiment of the disclosure. The method is performed by a terminal. As shown in FIG. 12, the method may include, but is not limited to, the following steps.

Step 121, a mode for aligning a payload of a first DCI with a payload of one of second DCIs is determined according to a classification mode of a size of the first DCI, in which the first DCI is a DCI used for scheduling a MBS service, and the second DCI is a DCI used for scheduling a service other than the MBS service.

Optionally, the terminal can determine the classification mode of a size of the first DCI based on an instruction of a network device or a protocol agreement, which is not limited in this disclosure.

Optionally, in a case where the classification mode of the size of the first DCI is classifying the first DCI as a DCI scrambled by a C-RNTI, it is determined to align the payload of the first DCI with a payload of a second DCI transmitted in a CSS.

Or, in a case where the classification mode of the size of the first DCI is classifying the first DCI as a DCI scrambled by a C-RNTI, it is determined to align the payload of the first DCI with a payload of a second DCI transmitted in a USS.

Or, in a case where the classification mode of the size of the first DCI is classifying the first DCI as a DCI scrambled by a C-RNTI, a second DCI aligned with the first DCI is determined according a format of the first DCI.

Or, in a case where the classification mode of the size of the first DCI is classifying the first DCI as a DCI scrambled by a radio network temporary identifier (RNTI) other than the C-RNTI, it is determined to align the payload of the first DCI with a payload of a second DCI scrambled by the RNTI other than the C-RNTI.

Optionally, in a case where the classification mode of the size of the first DCI is classifying the first DCI as a DCI scrambled by a C-RNTI, determining the second DCI aligned with the first DCI according the format of the first DCI may include:
in a case where the format of the first DCI is format 1_0, determining that the second DCI whose payload is aligned with the payload of the first DCI is a second DCI scrambled by the RNTI other than the C-RNTI;
in a case where the format of the first DCI is format 1_1 or format 1_2, and a current cell is configured with a second DCI having a same format as the first DCI, determining that the second DCI whose payload is aligned with the payload of the first DCI is a second DCI scrambled by the C-RNTI; or
in a case where the format of the first DCI is format 1_1 or format 1 2, and the current cell is not configured with a second DCI with a same format as the first DCI, determining that the second DCI whose payload is aligned with the payload of the first DCI is a specified second DCI, in which the specified second DCI is a DCI in format 1_1 or format 1_2.

By implementing embodiments of the disclosure, the terminal determines the mode for aligning the payload of the first DCI with the payload of one of the second DCIs according to the classification mode of the size of the first DCI. The first DCI is the DCI used for scheduling the MBS specific service, and the second DCI is the DCI used for scheduling the service other than the MBS specific service. Therefore, the terminal determines the mode for aligning the payload of the first DCI with the payload of one of the second DCIs according to the classification mode of the size of the first DCI, thereby determining a type of service indicated by the DCI.

As illustrated in FIG. 13, FIG. 13 is a flowchart of a method for aligning DCI provided by an embodiment of the disclosure. The method is performed by a terminal. As shown in FIG. 13, the method may include, but is not limited to, the following steps.

Step 131, a mode for aligning a payload of a first DCI with a payload of one of second DCIs is determined according to a classification mode of a size of the first DCI, in which the first DCI is a DCI used for scheduling a MBS service, and the second DCI is a DCI used for scheduling a service other than the MBS service.

The specific implementation form of step 131 can refer to the detailed description in other embodiments of the disclosure, and will not be elaborated here.

Step 132, FDRA information is determined according to a number of RBs contained in a CORESET # 0, or a number of RBs contained in an initial DL BWP.

In a case where the number of RBs contained in the CORESET # 0 is greater than the number of RBs contained in a CFR, the FDRA information is determined according to N highest bits or N lowest bits in the first DCI.

Or, in a case where the number of RBs contained in the initial DL BWP is greater than the number of RBs contained in the CFR, the FDRA information is determined according to N highest bits or N lowest bits in the first DCI.

N is a positive integer.

Optionally, a frequency-domain scheduling granularity of the first DCI is scaled in a case where the number of RBs contained in the CORESET # 0 is less than the number of RBs contained in the CFR.

Or, the frequency-domain scheduling granularity of the first DCI is scaled in a case where the number of RBs contained in the initial DL BWP is less than the number of RBs contained in the CFR.

Optionally, a scaling factor can be determined according to a ratio of the number of RBs contained in the CFR to the number of RBs contained in the CORESET # 0.

Or, the scaling factor can be determined according to a ratio of the number of RBs contained in the CFR to the number of RBs contained in the initial DL BWP.

By implementing embodiments of the disclosure, the terminal determines the mode for aligning the payload of the first DCI with the payload of one of the second DCIs according to the classification mode of the size of the first DCI. The first DCI is the DCI used for scheduling the MBS specific service, and the second DCI is the DCI used for scheduling the service other than the MBS specific service. The terminal determines the FDRA information according to the number of RBs contained in the CORESET # 0, or the number of RBs FDRA information according to in the DL BWP. Therefore, the terminal determines the mode for aligning the payload of the first DCI with the payload of one of the second DCIs according to the classification mode of the size of the first DCI, thereby determining a type of the service indicated by the DCI, and allocating frequency-domain resources for the service.

In the above embodiments of the disclosure, the method provided by the embodiments of the disclosure is described from the perspectives of the network device and the terminal, respectively. In order to realize each of the above-described functions in the method provided by the embodiments of the disclosure, the network device and the terminal may include a hardware structure and a software module, and realize each of the above-described functions in the form of the hardware structure, the software module, or a combination of the hardware structure and the software module. A certain function of the above functions may be performed in the form of the hardware structure, the software module, or a combination of the hardware structure and the software module.

As illustrated in FIG. 14, FIG. 14 is a structural diagram of a communication device 140 provided by an embodiment of the disclosure. The communication device 140 as shown in FIG. 14 may include: a processing module 1401 and a transceiver module 1402.

The transceiver module 1402 may include a sending module and/or a receiving module. The sending module is used for implementing a sending function, and the receiving module is used for implementing a receiving function. The transceiver module 1402 is used for implementing the sending and/or receiving function.

It can be understood that communication device 140 can be a network device, a device in the network device, or a device that can be used in combination with the network device.

The communication device 140, when at the terminal side, includes:
the processing module 1401, configured to align a payload of a first DCI with a payload of one of second DCIs according to a classification mode of a size of the first DCI, in which the first DCI is a DCI used for scheduling a multicast-broadcast scheduling (MBS) service, and the second DCI is a DCI used for scheduling a service other than the MBS service.

Optionally, the processor 1401 is configured to:
in a case where the classification mode of the size of the first DCI is classifying the first DCI as a DCI scrambled by a cell-radio network temporary identifier (C-RNTI), and alignment of the second DCIs is completed, align the payload of the first DCI with a payload of a second DCI transmitted in a common search space (CSS) or a user equipment (UE)-specific search space (USS).

Optionally, the processor 1401 is configured to:
add a padding bit to the first DCI, or add an appended bit after all effective information fields of the first DCI, or perform truncation on the first DCI, to make a payload of a processed first DCI consistent with a payload of a DCI in format 1_0 transmitted in the CSS;
   or
add a padding bit to the first DCI, or add an appended bit after all effective information fields of the first DCI, or perform truncation on the first DCI, to make a payload of a processed first DCI consistent with a payload of a DCI in format 1_0 transmitted in the USS;
   or
add a padding bit to the first DCI, or add an appended bit after all effective information fields of the first DCI, or perform truncation on the first DCI, to make a payload of a processed first DCI consistent with a payload of a DCI in format 1_1 transmitted in the USS;
   or
add a padding bit to the first DCI, or add an appended bit after all effective information fields of the first DCI, or perform truncation on the first DCI, to make a payload of a processed first DCI consistent with a payload of a DCI in format 1_2 transmitted in the USS;
   or
add a padding bit to a second DCI in a format 1_1 or a format 1_2 transmitted in the USS, or add an appended bit after all effective information fields of the second DCI, or perform truncation on the second DCI, to make a payload of a processed second DCI consistent with the payload of the first DCI.

Optionally, the processor 1401 is configured to:
in a case where the classification mode of the size of the first DCI is classifying the first DCI as a DCI scrambled by a radio network temporary identifier (RNTI) other than the C-RNTI, align the payload of the first DCI with a payload of a second DCI scrambled by the RNTI other than the C-RNTI.

Optionally, the processor 1401 is configured to:
determine a size of a frequency-domain resource allocation (FDRA) field in the first DCI according to a number of resource blocks (RBs) contained in a control resource set (CORESET) # 0, or a number of RBs contained in an initial downlink (DL) bandwidth portion (BWP); and
in a case where the payload of the first DCI is different from the payload of the second DCI scrambled by the RNTI other than the C-RNTI, align the payload of the first DCI with the payload of the second DCI scrambled by the RNTI other than the C-RNTI.

Optionally, the processor 1401 is configured to:
in a case where the payload of the first DCI is smaller than the payload of the second DCI scrambled by the RNTI other than the C-RNTI, add a padding bit to the first DCI, or add an appended bit after all effective information fields of the first DCI;
   or
in a case where the payload of the first DCI is greater than the payload of the second DCI scrambled by the RNTI other than the C-RNTI, perform truncation on the first DCI.

Optionally, the processor 1401 is configured to:
perform the truncation on the FDRA field of the first DCI.

Optionally, the processor 1401 is configured to:
in a case where the number of RBs contained in the CORESET # 0 is greater than a number of RBs contained in a common frequency resource (CFR), determine FDRA information according to N highest bits or N lowest bits in the first DCI;
   or
in a case where the number of RBs contained in the initial DL BWP is greater than the number of RBs contained in the CFR, determine the FDRA information according to the N highest bits or the N lowest bits in the first DCI;
N is a positive integer.

Optionally, the processor 1401 is configured to:
scale a frequency-domain scheduling granularity of the first DCI in a case where the number of RBs contained in the CORESET # 0 is less than a number of RBs contained in a CFR;
   or
scale the frequency-domain scheduling granularity of the first DCI in a case where the number of RBs contained in the initial DL BWP is less than the number of RBs contained in the CFR.

Optionally, the processor 1401 is configured to:
determine a scaling factor according to a ratio of the number of RBs contained in the CFR to the number of RBs contained in the CORESET # 0;
   or
determine a scaling factor according to a ratio of the number of RBs contained in the CFR to the number of RBs contained in the DL BWP.

Optionally, the processor 1401 is configured to:
in a case where the classification mode of the size of the first DCI is classifying the first DCI as a DCI scrambled by a C-RNTI, and alignment of the second DCIs is not completed, align the payload of the first DCI with the payload of one of the second DCIs according to a format of the first DCI.

Optionally, the processor 1401 is configured to:
in a case where the format of the first DCI is format 1_0, determine a size of a FDRA field in the first DCI according to a number of RBs contained in a CORESET # 0 or a number of RBs contained in an initial DL BWP; and
in a case where the payload of the first DCI is different from a payload of a second DCI scrambled by a RNTI other than the C-RNTI, add a padding bit to the first DCI, or add an appended bit after all effective information fields of the first DCI, or perform truncation on a part of the information fields, to align the payload of the first DCI with the payload of the second DCI scrambled by the RNTI other than the C-RNTI.

Optionally, the processor 1401 is configured to:
in a case where the number of RBs contained in the CORESET # 0 is greater than a number of RBs contained in a CFR, or in a case where the number of RBs contained in the initial DL BWP is greater than the number of RBs contained in the CFR, determine FDRA information according to N highest bits or N lowest bits in the first DCI, in which N is a positive integer;
   or
in a case where the number of RBs contained in the CORESET # 0 is less than the number of RBs contained in the CFR, or in a case where the number of RBs contained in the initial DL BWP is less than the number of RBs contained in the CFR, scale a frequency-domain scheduling granularity of the first DCI.

Optionally, the processor 1401 is configured to:
determine a scaling factor according to a ratio of the number of RBs contained in the CFR to the number of RBs contained in the CORESET # 0;
   or
determine a scaling factor according to a ratio of the number of RBs contained in the CFR to the number of RBs contained in the DL BWP.

Optionally, the processor 1401 is configured to:
in a case where the format of the first DCI is format 1_1 or format 1_2, determine a size of a FDRA field in the first DCI according to a number of RBs included in a CFR; and
align the payload of the first DCI with the payload of one of the second DCIs.

Optionally, the processor 1401 is configured to:
in a case where a current cell is configured with a second DCI having a same format as the first DCI, align the payload of the first DCI with a payload of the second DCI having the same format as the first DCI and scrambled by the C-RNTI;
   or
in a case where the current cell is not configured with a second DCI having a same format as the first DCI, align the payload of the first DCI with a payload of a specified second DCI, in which the specified second DCI is a DCI in format 1_1 or format 1_2.

Optionally, the processor 1401 is configured to:
in a case where the payload of the first DCI is smaller than the payload of one of the second DCIs, add a padding bit to the first DCI, or add an appended bit after an information field of the first DCI;
   or
in a case where the payload of the first DCI is greater than the payload of one of the second DCIs, perform truncation on the first DCI.

Optionally, the processor 1401 is configured to:
add the padding bit in a FDRA field of the first DCI.

Optionally, the processor 1401 is configured to:
perform truncation on a FDRA field in the first DCI.

In the communication device provided in the disclosure, the network device aligns the payload of the first DCI with the payload of one of the second DCIs according to the classification mode of the size of the first DCI. The first DCI is the DCI used for scheduling the MBS specific service, and the second DCI is the DCI used for scheduling the service other than the MBS specific service. Therefore, the payload of the first DCI used for scheduling the MBS service is aligned with the payload of one of the second DCIs used for scheduling the service other than the MBS service, a total number of DCI sizes sent by the network device is prevented from exceeding the capacity of a terminal.

It can be understood that communication device 140 can be a terminal, a device in the terminal, or a device that can be used in combination with the terminal.

The communication device 140, when at the network device side, includes:
the processing module 1401, configured to determine a mode for aligning a payload of a first DCI with a payload of one of second DCIs according to a classification mode of a size of the first DCI, in which the first DCI is a DCI used for scheduling a multicast-broadcast scheduling (MBS) service, and the second DCI is a DCI used for scheduling a service other than the MBS service.

Optionally, the processor 1401 is configured to:
in a case where the classification mode of the size of the first DCI is classifying the first DCI as a DCI scrambled by a cell-radio network temporary identifier (C-RNTI), determine to align the payload of the first DCI with a payload of a second DCI transmitted in a common search space (CSS);
   or
in a case where the classification mode of the size of the first DCI is classifying the first DCI as a DCI scrambled by a C-RNTI, determine to align the payload of the first DCI with a payload of a second DCI transmitted in a user equipment (UE)-specific search space (USS);
   or
in a case where the classification mode of the size of the first DCI is classifying the first DCI as a DCI scrambled by a C-RNTI, determine a second DCI aligned with the first DCI according a format of the first DCI;
   or
in a case where the classification mode of the size of the first DCI is classifying the first DCI as a DCI scrambled by a radio network temporary identifier (RNTI) other than the C-RNTI, determine to align the payload of the first DCI with a payload of a second DCI scrambled by the RNTI other than the C-RNTI.

Optionally, the processor 1401 is configured to:
in a case where the format of the first DCI is format 1_0, determine that the second DCI whose payload is aligned with the payload of the first DCI is a second DCI scrambled by the RNTI other than the C-RNTI;
   or
in a case where the format of the first DCI is format 1_1 or format 1_2, and a current cell is configured with a second DCI having a same format as the first DCI, determine that the second DCI whose payload is aligned with the payload of the first DCI is a second DCI scrambled by the C-RNTI;
   or
in a case where the format of the first DCI is format 1_1 or format 1 2, and the current cell is not configured with a second DCI with a same format as the first DCI, determine that the second DCI whose payload is aligned with the payload of the first DCI is a specified second DCI, in which the specified second DCI is a DCI in format 1_1 or format 1_2.

Optionally, the processor 1401 is configured to:
in a case where a number of resource blocks (RBs) contained in a control resource set (CORESET) # 0 is greater than a number of RBs contained in a common frequency resource (CFR), determine frequency-domain resource allocation (FDRA) information according to N highest bits or N lowest bits in the first DCI;
   or
in a case where a number of RBs contained in an initial downlink (DL) bandwidth portion (BWP) is greater than the number of RBs contained in the CFR, determine the FDRA information according to the N highest bits or the N lowest bits in the first DCI;
N is a positive integer.

Optionally, the processor 1401 is configured to:
scale a frequency-domain scheduling granularity of the first DCI in a case where the number of RBs contained in the CORESET # 0 is less than the number of RBs contained in the CFR;
   or
scale a frequency-domain scheduling granularity of the first DCI in a case where the number of RBs contained in the initial DL BWP is less than the number of RBs contained in the CFR.

Optionally, the processor 1401 is configured to:
determine a scaling factor according to a ratio of the number of RBs contained in the CFR to the number of RBs contained in the CORESET # 0;
   or
determine a scaling factor according to a ratio of the number of RBs contained in the CFR to the number of RBs contained in the initial DL BWP.

In the communication device provided in the disclosure, the terminal determines the mode for aligning the payload of the first DCI with the payload of one of the second DCIs according to the classification mode of the size of the first DCI. The first DCI is the DCI used for scheduling the MBS specific service, and the second DCI is the DCI used for scheduling the service other than the MBS specific service. Therefore, the terminal determines the mode for aligning the payload of the first DCI with the payload of one of the second DCIs according to the classification mode of the size of the first DCI, thereby determining a type of service indicated by the DCI.

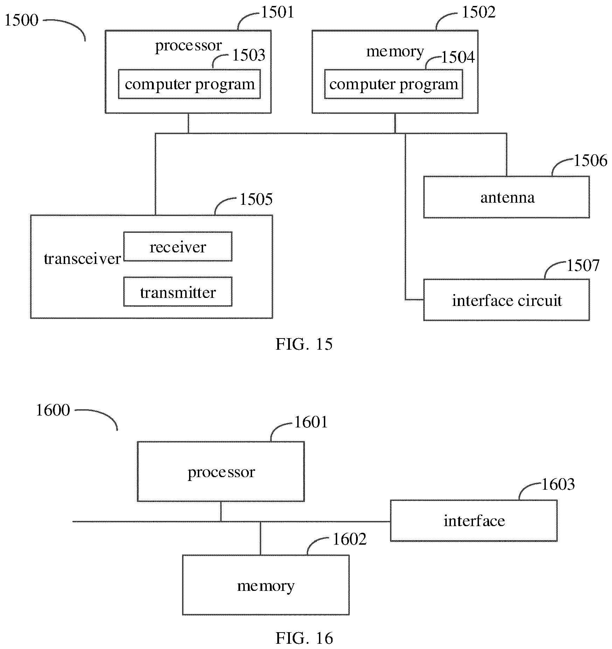

As illustrated in FIG. 15, FIG. 15 is a schematic diagram of a communication device 150 provided by an embodiment of the disclosure. The communication device 150 may be a network device or a terminal, or may be a chip, a chip system or a processor that supports the terminal to realize the above-described methods. The device may be used to realize the methods described in the above method embodiments with reference to the description of the above-described method embodiments.

The communication device 150 may include one or more processors 1501. The processor 1501 may be a general-purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a distributed unit (DU), or a central unit (CU)), executing computer programs, and processing data of the computer programs.

Optionally, the communication device 150 may include one or more memories 1502 on which a computer program 1504 may be stored. The processor 1501 executes the computer program 1504 to cause the communication device 150 to perform the methods described in the above method embodiments. Optionally, the memory 1502 may also store data. The communication device 150 and the memory 1502 may be provided separately or may be integrated together.

Optionally, the communication device 150 may also include a transceiver 1505 and an antenna 1506. The transceiver 1505 may be referred to as a transceiver unit, a transceiver machine, or a transceiver circuit, for realizing a transceiver function. The transceiver 1505 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device 150 may also include one or more interface circuits 1507. The interface circuits 1507 are used to receive code instructions and transmit them to the processor 1501. The processor 1501 runs the code instructions to cause the communication device 150 to perform the method described in the method embodiments.

The communication device 150 is a network device. The processor 1501 is configured to perform step 21 in FIG. 2, or step 31 in FIG. 3, or step 41 in FIG. 4, or step 51 in FIG. 5, or step 61 in FIG. 6, or step 71 in FIG.7, etc.

The communication device 150 is a terminal. The processor 1501 is configured to perform step 121 in FIG. 12, or step 131 and step 132 in FIG. 13, etc.

In an implementation, the processor 1501 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1501 may store a computer program 1503. When the computer program 1503 runs on the processor 1501, the communication device 150 may be caused to perform the methods described in the method embodiments above. The computer program 1503 may be solidified in the processor 1501, and in such case the processor 1501 may be implemented by hardware.

In an implementation, the communication device 150 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal, but the scope of the communication device described in the disclosure is not limited thereto, and the structure of the communication device may not be limited by FIG. 14. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

A case where the communication device may be a chip or a chip system is described with reference to the schematic structure of the chip shown in FIG. 16. The chip shown in FIG. 16 includes a processor 1601 and an interface 1602. There may be one or more processors 1601, and there may be multiple interfaces 1602.

In the case where the chip is used to implement the function of the terminal in the embodiments of the disclosure:
the processor 1601 is used to perform step 21 in FIG. 2, or step 31 in FIG. 3, or step 41 in FIG. 4, or step 51 in FIG. 5, or step 61 in FIG. 6, or step 71 in FIG.7, etc.

In the case where the chip is used to implement the function of the network device in the embodiments of the disclosure:
the processor 1601 is used to perform step 121 in FIG. 12, or step 131 and step 132 in FIG. 13, etc.

Optionally, the chip further includes a memory 1603 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a communication system. The system includes the communication device as a terminal and the communication device as a network device in the aforementioned embodiment of FIG. 14. Or, the system includes the communication device as a terminal and the communication device as a network device in the aforementioned embodiment of FIG. 15.

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondences shown in the tables in the disclosure can be configured or predefined. The values of information in each table are only examples and can be configured to other values, which are not limited by this disclosure. When configuring the correspondence between information and various parameters, it is not necessary to configure all the correspondence shown in each table. For example, in the tables in the disclosure, some correspondence relationships shown in certain rows may not be configured. For example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and steps of the various examples described in combination with the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for aligning downlink control information (DCI), performed by a network device, comprising:
aligning a payload of a first DCI with a payload of one of second DCIs according to a classification mode of a size of the first DCI, wherein the first DCI is a DCI used for scheduling a multicast-broadcast scheduling (MBS) service, and the second DCI is a DCI used for scheduling a service other than the MBS service.

2. The method of claim 1, wherein aligning the payload of the first DCI with the payload of one of the second DCIs according to the classification mode of the size of the first DCI comprises:
in a case where the classification mode of the size of the first DCI is classifying the first DCI as a DCI scrambled by a cell-radio network temporary identifier (C-RNTI), and alignment of the second DCIs is completed, aligning the payload of the first DCI with a payload of a second DCI transmitted in a common search space (CSS) or a user equipment (UE)-specific search space (USS).

3. The method of claim 2, wherein aligning the payload of the first DCI with the payload of the second DCI transmitted in the CSS or the USS comprises:
adding a padding bit to the first DCI, or adding an appended bit after all effective information fields of the first DCI, or performing truncation on the first DCI, to make a payload of a processed first DCI consistent with a payload of a DCI in format 1_0 transmitted in the CSS; or
adding a padding bit to the first DCI, or adding an appended bit after all effective information fields of the first DCI, or performing truncation on the first DCI, to make a payload of a processed first DCI consistent with a payload of a DCI in format 1_0 transmitted in the USS; or
adding a padding bit to the first DCI, or adding an appended bit after all effective information fields of the first DCI, or performing truncation on the first DCI, to make a payload of a processed first DCI consistent with a payload of a DCI in format 1_1 transmitted in the USS; or
adding a padding bit to the first DCI, or adding an appended bit after all effective information fields of the first DCI, or performing truncation on the first DCI, to make a payload of a processed first DCI consistent with a payload of a DCI in format 1_2 transmitted in the USS; or
adding a padding bit to a second DCI in a format 1_1 or a format 1_2 transmitted in the USS, or adding an appended bit after all effective information fields of the second DCI, or performing truncation on the second DCI, to make a payload of a processed second DCI consistent with the payload of the first DCI.

4. The method of claim 1, wherein aligning the payload of the first DCI with the payload of one of the second DCIs according to the classification mode of the size of the first DCI comprises:
in a case where the classification mode of the size of the first DCI is classifying the first DCI as a DCI scrambled by a radio network temporary identifier (RNTI) other than the C-RNTI, aligning the payload of the first DCI with a payload of a second DCI scrambled by the RNTI other than the C-RNTI.

5. The method of claim 4, wherein aligning the payload of the first DCI with the payload of the second DCI scrambled by the RNTI other than the C-RNTI comprises:
determining a size of a frequency-domain resource allocation (FDRA) field in the first DCI according to a number of resource blocks (RBs) contained in a control resource set (CORESET) # 0, or a number of RBs contained in an initial downlink (DL) bandwidth portion (BWP); and
in a case where the payload of the first DCI is different from the payload of the second DCI scrambled by the RNTI other than the C-RNTI, aligning the payload of the first DCI with the payload of the second DCI scrambled by the RNTI other than the C-RNTI.

6. The method of claim 5, where aligning the payload of the first DCI with the payload of the second DCI scrambled by the RNTI other than the C-RNTI comprises:
in a case where the payload of the first DCI is smaller than the payload of the second DCI scrambled by the RNTI other than the C-RNTI, adding a padding bit to the first DCI, or adding an appended bit after all effective information fields of the first DCI; or
in a case where the payload of the first DCI is greater than the payload of the second DCI scrambled by the RNTI other than the C-RNTI, performing truncation on the first DCI.

7. The method of claim 6, wherein performing the truncation on the first DCI comprises:
performing the truncation on the FDRA field of the first DCI.

8. The method of claim 5, further comprising:
in a case where the number of RBs contained in the CORESET # 0 is greater than a number of RBs contained in a common frequency resource (CFR), determining FDRA information according to N highest bits or N lowest bits in the first DCI; or
in a case where the number of RBs contained in the initial DL BWP is greater than the number of RBs contained in the CFR, determining the FDRA information according to the N highest bits or the N lowest bits in the first DCI;
wherein, N is a positive integer.

9. The method of claim 5, further comprising:
scaling a frequency-domain scheduling granularity of the first DCI in a case where the number of RBs contained in the CORESET # 0 is less than a number of RBs contained in a CFR; or
scaling the frequency-domain scheduling granularity of the first DCI in a case where the number of RBs contained in the initial DL BWP is less than the number of RBs contained in the CFR.

10. The method of claim 9, wherein scaling the frequency-domain scheduling granularity of the first DCI comprises:
determining a scaling factor according to a ratio of the number of RBs contained in the CFR to the number of RBs contained in the CORESET # 0; or
determining a scaling factor according to a ratio of the number of RBs contained in the CFR to the number of RBs contained in the DL BWP.

11. The method of claim 1, wherein aligning the payload of the first DCI with the payload of one of the second DCIs according to the classification mode of a size of the first DCI comprises:
in a case where the classification mode of the size of the first DCI is classifying the first DCI as a DCI scrambled by a C-RNTI, and alignment of the second DCIs is not completed, aligning the payload of the first DCI with the payload of one of the second DCIs according to a format of the first DCI.

12. The method of claim 11, wherein aligning the payload of the first DCI with the payload of one of the second DCIs according to the format of the first DCI comprises:
in a case where the format of the first DCI is format 1_0, determining a size of a FDRA field in the first DCI according to a number of RBs contained in a CORESET # 0 or a number of RBs contained in an initial DL BWP; and
in a case where the payload of the first DCI is different from a payload of a second DCI scrambled by a RNTI other than the C-RNTI, adding a padding bit to the first DCI, or adding an appended bit after all effective information fields of the first DCI, or performing truncation on a part of the information fields, to align the payload of the first DCI with the payload of the second DCI scrambled by the RNTI other than the C-RNTI.

13. The method of claim 12, further comprising:
in a case where the number of RBs contained in the CORESET # 0 is greater than a number of RBs contained in a CFR, or in a case where the number of RBs contained in the initial DL BWP is greater than the number of RBs contained in the CFR, determining FDRA information according to N highest bits or N lowest bits in the first DCI, wherein N is a positive integer; or
in a case where the number of RBs contained in the CORESET # 0 is less than the number of RBs contained in the CFR, or in a case where the number of RBs contained in the initial DL BWP is less than the number of RBs contained in the CFR, scaling a frequency-domain scheduling granularity of the first DCI.

14. The method of claim 13, wherein scaling the frequency-domain scheduling granularity of the first DCI comprises:
determining a scaling factor according to a ratio of the number of RBs contained in the CFR to the number of RBs contained in the CORESET # 0; or
determining a scaling factor according to a ratio of the number of RBs contained in the CFR to the number of RBs contained in the DL BWP.

15. The method of claim 11, wherein aligning the payload of the first DCI with the payload of one of the second DCIs according to the format of the first DCI comprises:
in a case where the format of the first DCI is format 1_1 or format 1_2, determining a size of a FDRA field in the first DCI according to a number of RBs included in a CFR; and
aligning the payload of the first DCI with the payload of one of the second DCIs.

16. The method of claim 15, wherein aligning the payload of the first DCI with the payload of one of the second DCIs comprises:
in a case where a current cell is configured with a second DCI having a same format as the first DCI, aligning the payload of the first DCI with a payload of the second DCI having the same format as the first DCI and scrambled by the C-RNTI; or
in a case where the current cell is not configured with a second DCI having a same format as the first DCI, aligning the payload of the first DCI with a payload of a specified second DCI, wherein the specified second DCI is a DCI in format 1_1 or format 1_2.

17. The method of any one of claims 11-16, wherein aligning the payload of the first DCI with the payload of one of the second DCIs comprises:
in a case where the payload of the first DCI is smaller than the payload of one of the second DCIs, adding a padding bit to the first DCI, or adding an appended bit after an information field of the first DCI; or
in a case where the payload of the first DCI is greater than the payload of one of the second DCIs, performing truncation on the first DCI.

18. The method of claim 17, wherein adding the padding bit to the first DCI or adding the appended bit after the information field of the first DCI comprises:
adding the padding bit in a FDRA field of the first DCI.

19. The method of claim 17, wherein performing truncation on the first DCI comprises:
performing truncation on a FDRA field in the first DCI.

20. A method for aligning downlink control information (DCI), performed by a terminal, comprising:
determining a mode for aligning a payload of a first DCI with a payload of one of second DCIs according to a classification mode of a size of the first DCI, wherein the first DCI is a DCI used for scheduling a multicast-broadcast scheduling (MBS) service, and the second DCI is a DCI used for scheduling a service other than the MBS service.

21. The method of claim 20, wherein determining the mode for aligning the payload of the first DCI with the payload of one of the second DCIs according to the classification mode of the size of the first DCI comprises:
in a case where the classification mode of the size of the first DCI is classifying the first DCI as a DCI scrambled by a cell-radio network temporary identifier (C-RNTI), determining to align the payload of the first DCI with a payload of a second DCI transmitted in a common search space (CSS); or
in a case where the classification mode of the size of the first DCI is classifying the first DCI as a DCI scrambled by a C-RNTI, determining to align the payload of the first DCI with a payload of a second DCI transmitted in a user equipment (UE)-specific search space (USS); or
in a case where the classification mode of the size of the first DCI is classifying the first DCI as a DCI scrambled by a C-RNTI, determining a second DCI aligned with the first DCI according a format of the first DCI; or
in a case where the classification mode of the size of the first DCI is classifying the first DCI as a DCI scrambled by a radio network temporary identifier (RNTI) other than the C-RNTI, determining to align the payload of the first DCI with a payload of a second DCI scrambled by the RNTI other than the C-RNTI.

22. The method of claim 21, wherein determining the second DCI aligned with the first DCI according the format of the first DCI comprises:
in a case where the format of the first DCI is format 1_0, determining that the second DCI whose payload is aligned with the payload of the first DCI is a second DCI scrambled by the RNTI other than the C-RNTI; or
in a case where the format of the first DCI is format 1_1 or format 1_2, and a current cell is configured with a second DCI having a same format as the first DCI, determining that the second DCI whose payload is aligned with the payload of the first DCI is a second DCI scrambled by the C-RNTI; or
in a case where the format of the first DCI is format 1_1 or format 1 2, and the current cell is not configured with a second DCI with a same format as the first DCI, determining that the second DCI whose payload is aligned with the payload of the first DCI is a specified second DCI, wherein the specified second DCI is a DCI in format 1_1 or format 1_2.

23. The method of claim 21, further comprising:
in a case where a number of resource blocks (RBs) contained in a control resource set (CORESET) # 0 is greater than a number of RBs contained in a common frequency resource (CFR), determining frequency-domain resource allocation (FDRA) information according to N highest bits or N lowest bits in the first DCI; or
in a case where a number of RBs contained in an initial downlink (DL) bandwidth portion (BWP) is greater than the number of RBs contained in the CFR, determining the FDRA information according to the N highest bits or the N lowest bits in the first DCI;
wherein, N is a positive integer.

24. The method of claim 23, further comprising:
scaling a frequency-domain scheduling granularity of the first DCI in a case where the number of RBs contained in the CORESET # 0 is less than the number of RBs contained in the CFR; or
scaling a frequency-domain scheduling granularity of the first DCI in a case where the number of RBs contained in the initial DL BWP is less than the number of RBs contained in the CFR.

25. The method of claim 24, wherein scaling the frequency-domain scheduling granularity of the first DCI comprises:
determining a scaling factor according to a ratio of the number of RBs contained in the CFR to the number of RBs contained in the CORESET # 0; or
determining a scaling factor according to a ratio of the number of RBs contained in the CFR to the number of RBs contained in the initial DL BWP.

26. An apparatus for aligning downlink control information (DCI), at a network device, comprising:
a processing module, configured to align a payload of a first DCI with a payload of one of second DCIs according to a classification mode of a size of the first DCI, wherein the first DCI is a DCI used for scheduling a multicast-broadcast scheduling (MBS) service, and the second DCI is a DCI used for scheduling a service other than the MBS service.

27. The apparatus of claim 26, wherein the processor is configured to:
in a case where the classification mode of the size of the first DCI is classifying the first DCI as a DCI scrambled by a cell-radio network temporary identifier (C-RNTI), and alignment of the second DCIs is completed, align the payload of the first DCI with a payload of a second DCI transmitted in a common search space (CSS) or a user equipment (UE)-specific search space (USS).

28. The apparatus of claim 28, wherein the processor is configured to:
add a padding bit to the first DCI, or add an appended bit after all effective information fields of the first DCI, or perform truncation on the first DCI, to make a payload of a processed first DCI consistent with a payload of a DCI in format 1_0 transmitted in the CSS;
add a padding bit to the first DCI, or add an appended bit after all effective information fields of the first DCI, or perform truncation on the first DCI, to make a payload of a processed first DCI consistent with a payload of a DCI in format 1_0 transmitted in the USS;
add a padding bit to the first DCI, or add an appended bit after all effective information fields of the first DCI, or perform truncation on the first DCI, to make a payload of a processed first DCI consistent with a payload of a DCI in format 1_1 transmitted in the USS;
add a padding bit to the first DCI, or add an appended bit after all effective information fields of the first DCI, or perform truncation on the first DCI, to make a payload of a processed first DCI consistent with a payload of a DCI in format 1_2 transmitted in the USS; or
add a padding bit to a second DCI in a format 1_1 or a format 1_2 transmitted in the USS, or add an appended bit after all effective information fields of the second DCI, or perform truncation on the second DCI, to make a payload of a processed second DCI consistent with the payload of the first DCI.

29. The apparatus of claim 26, wherein the processor is configured to:
in a case where the classification mode of the size of the first DCI is classifying the first DCI as a DCI scrambled by a radio network temporary identifier (RNTI) other than the C-RNTI, align the payload of the first DCI with a payload of a second DCI scrambled by the RNTI other than the C-RNTI.

30. The apparatus of claim 29, wherein the processor is configured to:
determine a size of a frequency-domain resource allocation (FDRA) field in the first DCI according to a number of resource blocks (RBs) contained in a control resource set (CORESET) # 0, or a number of RBs contained in an initial downlink (DL) bandwidth portion (BWP); and
in a case where the payload of the first DCI is different from the payload of the second DCI scrambled by the RNTI other than the C-RNTI, align the payload of the first DCI with the payload of the second DCI scrambled by the RNTI other than the C-RNTI.

31. The apparatus of claim 30, wherein the processor is configured to:
in a case where the payload of the first DCI is smaller than the payload of the second DCI scrambled by the RNTI other than the C-RNTI, add a padding bit to the first DCI, or add an appended bit after all effective information fields of the first DCI; or
in a case where the payload of the first DCI is greater than the payload of the second DCI scrambled by the RNTI other than the C-RNTI, perform truncation on the first DCI.

32. The apparatus of claim 31, wherein the processor is configured to:
perform the truncation on the FDRA field of the first DCI.

33. The apparatus of claim 30, wherein the processor is configured to:
in a case where the number of RBs contained in the CORESET # 0 is greater than a number of RBs contained in a common frequency resource (CFR), determine FDRA information according to N highest bits or N lowest bits in the first DCI; or
in a case where the number of RBs contained in the initial DL BWP is greater than the number of RBs contained in the CFR, determine the FDRA information according to the N highest bits or the N lowest bits in the first DCI;
wherein, N is a positive integer.

34. The apparatus of claim 30, further comprising:
scale a frequency-domain scheduling granularity of the first DCI in a case where the number of RBs contained in the CORESET # 0 is less than a number of RBs contained in a CFR; or
scale the frequency-domain scheduling granularity of the first DCI in a case where the number of RBs contained in the initial DL BWP is less than the number of RBs contained in the CFR.

35. The apparatus of claim 34, wherein the processor is configured to:
determine a scaling factor according to a ratio of the number of RBs contained in the CFR to the number of RBs contained in the CORESET # 0; or
determine a scaling factor according to a ratio of the number of RBs contained in the CFR to the number of RBs contained in the DL BWP.

36. The apparatus of claim 26, wherein the processor is configured to:
in a case where the classification mode of the size of the first DCI is classifying the first DCI as a DCI scrambled by a C-RNTI, and alignment of the second DCIs is not completed, align the payload of the first DCI with the payload of one of the second DCIs according to a format of the first DCI.

37. The apparatus of claim 36, wherein the processor is configured to:
in a case where the format of the first DCI is format 1_0, determine a size of a FDRA field in the first DCI according to a number of RBs contained in a CORESET # 0 or a number of RBs contained in an initial DL BWP; and
in a case where the payload of the first DCI is different from a payload of a second DCI scrambled by a RNTI other than the C-RNTI, add a padding bit to the first DCI, or add an appended bit after all effective information fields of the first DCI, or perform truncation on a part of the information fields, to align the payload of the first DCI with the payload of the second DCI scrambled by the RNTI other than the C-RNTI.

38. The apparatus of claim 37, wherein the processor is configured to:
in a case where the number of RBs contained in the CORESET # 0 is greater than a number of RBs contained in a CFR, or in a case where the number of RBs contained in the initial DL BWP is greater than the number of RBs contained in the CFR, determine FDRA information according to N highest bits or N lowest bits in the first DCI, wherein N is a positive integer; or
in a case where the number of RBs contained in the CORESET # 0 is less than the number of RBs contained in the CFR, or in a case where the number of RBs contained in the initial DL BWP is less than the number of RBs contained in the CFR, scale a frequency-domain scheduling granularity of the first DCI.

39. The apparatus of claim 38, wherein the processor is configured to:
determine a scaling factor according to a ratio of the number of RBs contained in the CFR to the number of RBs contained in the CORESET # 0; or
determine a scaling factor according to a ratio of the number of RBs contained in the CFR to the number of RBs contained in the DL BWP.

40. The apparatus of claim 36, wherein the processor is configured to:
in a case where the format of the first DCI is format 1_1 or format 1_2, determine a size of a FDRA field in the first DCI according to a number of RBs included in a CFR; and
align the payload of the first DCI with the payload of one of the second DCIs.

41. The apparatus of claim 40, wherein the processor is configured to:
in a case where a current cell is configured with a second DCI having a same format as the first DCI, align the payload of the first DCI with a payload of the second DCI having the same format as the first DCI and scrambled by the C-RNTI; or
in a case where the current cell is not configured with a second DCI having a same format as the first DCI, align the payload of the first DCI with a payload of a specified second DCI, wherein the specified second DCI is a DCI in format 1_1 or format 1_2.

42. The apparatus of any one of claims 36-41, wherein the processor is configured to:
in a case where the payload of the first DCI is smaller than the payload of one of the second DCIs, add a padding bit to the first DCI, or add an appended bit after an information field of the first DCI; or
in a case where the payload of the first DCI is greater than the payload of one of the second DCIs, perform truncation on the first DCI.

43. The apparatus of claim 42, wherein the processor is configured to:
add the padding bit in a FDRA field of the first DCI.

44. The apparatus of claim 42, wherein the processor is configured to:
perform truncation on a FDRA field in the first DCI.

45. An apparatus for aligning downlink control information (DCI), performed by a terminal, comprising:
a processing module, configured to determine a mode for aligning a payload of a first DCI with a payload of one of second DCIs according to a classification mode of a size of the first DCI, wherein the first DCI is a DCI used for scheduling a multicast-broadcast scheduling (MBS) service, and the second DCI is a DCI used for scheduling a service other than the MBS service.

46. The apparatus of claim 45, wherein the processor is configured to perform:
in a case where the classification mode of the size of the first DCI is classifying the first DCI as a DCI scrambled by a cell-radio network temporary identifier (C-RNTI), determining to align the payload of the first DCI with a payload of a second DCI transmitted in a common search space (CSS); or
in a case where the classification mode of the size of the first DCI is classifying the first DCI as a DCI scrambled by a C-RNTI, determining to align the payload of the first DCI with a payload of a second DCI transmitted in a user equipment (UE)-specific search space (USS); or
in a case where the classification mode of the size of the first DCI is classifying the first DCI as a DCI scrambled by a C-RNTI, determining a second DCI aligned with the first DCI according a format of the first DCI; or
in a case where the classification mode of the size of the first DCI is classifying the first DCI as a DCI scrambled by a radio network temporary identifier (RNTI) other than the C-RNTI, determining to align the payload of the first DCI with a payload of a second DCI scrambled by the RNTI other than the C-RNTI.

47. The apparatus of claim 46, wherein the processor is configured to perform:
in a case where the format of the first DCI is format 1_0, determining that the second DCI whose payload is aligned with the payload of the first DCI is a second DCI scrambled by the RNTI other than the C-RNTI; or
in a case where the format of the first DCI is format 1_1 or format 1_2, and a current cell is configured with a second DCI having a same format as the first DCI, determining that the second DCI whose payload is aligned with the payload of the first DCI is a second DCI scrambled by the C-RNTI; or
in a case where the format of the first DCI is format 1_1 or format 1 2, and the current cell is not configured with a second DCI with a same format as the first DCI, determining that the second DCI whose payload is aligned with the payload of the first DCI is a specified second DCI, wherein the specified second DCI is a DCI in format 1_1 or format 1_2.

48. The apparatus of claim 46, wherein the processor is configured to:
in a case where a number of resource blocks (RBs) contained in a control resource set (CORESET) # 0 is greater than a number of RBs contained in a common frequency resource (CFR), determine frequency-domain resource allocation (FDRA) information according to N highest bits or N lowest bits in the first DCI; or
in a case where a number of RBs contained in an initial downlink (DL) bandwidth portion (BWP) is greater than the number of RBs contained in the CFR, determine the FDRA information according to the N highest bits or the N lowest bits in the first DCI;
wherein, N is a positive integer.

49. The apparatus of claim 48, wherein the processor is configured to:
scale a frequency-domain scheduling granularity of the first DCI in a case where the number of RBs contained in the CORESET # 0 is less than the number of RBs contained in the CFR; or
scale a frequency-domain scheduling granularity of the first DCI in a case where the number of RBs contained in the initial DL BWP is less than the number of RBs contained in the CFR.

50. The apparatus of claim 49, wherein the processor is configured to:
determine a scaling factor according to a ratio of the number of RBs contained in the CFR to the number of RBs contained in the CORESET # 0; or
determine a scaling factor according to a ratio of the number of RBs contained in the CFR to the number of RBs contained in the initial DL BWP.

51. A communication device, comprising a processor and a memory storing a computer program, wherein the processor executes the computer program to cause the device to implement the method of any one of claims 1-19.

52. A communication device, comprising a processor and a memory storing a computer program, wherein the processor executes the computer program to cause the device to implement the method of any one of claims 20-25.

53. A communication device, comprises: a processor and an interface circuit, wherein
the interface circuit is configured to receive code instructions and transmit the code instructions to the processor; and
the processor is configured to run the code instructions to perform the method of any one of claims 1-19.

54. A communication device, comprises: a processor and an interface circuit, wherein
the interface circuit is configured to receive code instructions and transmit the code instructions to the processor; and
the processor is configured to run the code instructions to perform the method of any one of claims 20-25.

55. A computer-readable storage medium for storing instructions, wherein when the instructions are executed, the method of any one of claims 1-19 is implemented.

56. A computer-readable storage medium for storing instructions, wherein when the instructions are executed, the method of any one of claims 20-25 is implemented.
